(19) Europäisches Patentamt
European Patent Office
Office européen des brevets

(11) **EP 2 779 749 A1**

(12) **EUROPEAN PATENT APPLICATION**
published in accordance with Art. 153(4) EPC

(43) Date of publication:
**17.09.2014 Bulletin 2014/38**

(51) Int Cl.:
***H04W 36/32*** *(2009.01)*

(21) Application number: **11875315.1**

(22) Date of filing: **07.11.2011**

(86) International application number:
**PCT/CN2011/081883**

(87) International publication number:
**WO 2013/067676 (16.05.2013 Gazette 2013/20)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(71) Applicant: **Fujitsu Limited**
**Kawasaki-shi, Kanagawa 211-8588 (JP)**

(72) Inventors:
• **LU, Yanling**
**Beijing 100025 (CN)**
• **CHANG, Ningjuan**
**Beijing 100025 (CN)**

(74) Representative: **Cooper-Rolfe, Elizabeth Louise**
**Haseltine Lake LLP**
**Lincoln House, 5th Floor**
**300 High Holborn**
**London WC1V 7JH (GB)**

(54) **CELL SELECTION METHOD, MEASUREMENT REPORT TRIGGERING METHOD, BASE STATION AND TERMINAL DEVICE**

(57)    A Method for selecting a cell, a method for triggering a measurement report, a base station and terminal equipment. The method for selecting a cell includes: notifying, by a base station, terminal equipment of a first scaling factor set for scaling hysteresis of a measurement result of a serving cell needed in evaluation of the serving cell, and/or a second scaling factor set for scaling an offset value of a measurement result of a neighboring cell needed in evaluation of the neighboring cell; wherein, the first scaling factor set and the second scaling factor set respectively include one or more scaling factors, and the second scaling factor set includes one or more scaling factors, the one scaling factor corresponding to a predefined moving speed, and each of the more scaling factors corresponding to a different moving speed. In this way, the base station needs not to notify the terminal equipment of sizes of a neighboring cell and a serving cell, so that signaling load is relatively small, selection of a reselected cell in cell reselection may be optimized, and the system not only is wholly improved with respect to spectrum utilization, but also guarantees service quality of users.

201

notifying, by a base station, terminal equipment of a first scaling factor set for scaling hysteresis of a measurement result of a serving cell needed in evaluation of the serving cell

202

notifying, by the base station, the terminal equipment of a second scaling factor set for scaling an offset value of a measurement result of a neighboring cell needed in evaluation of the neighboring cell

**Fig. 2**

EP 2 779 749 A1

**Description**

Technical Field

The present invention relates to the field of communications, and in particular to a method for selecting a cell, a method for triggering measurement report, a base station and terminal equipment.

Background

In a wireless mobile communication system, terminal equipment needs to perform cell selection in a movement process, so as to ensure that the terminal equipment is served continuously. In particular, the terminal equipment needs to be handed over in a connected mode or to perform cell reselection in an idle mode.

In the connected mode, in order to ensure correct triggering of handover, the terminal equipment needs to perform measurement of radio resource management (RRM). If the measurement result always satisfies a certain condition (referred to as a triggering condition of an event) within a specified period of time (referred to as a time to trigger (TTT)), the terminal equipment will report the measurement result to a base station. The base station may decide whether to start a handover process according to the measurement result.

Likewise, in the idle mode, when the terminal equipment performs cell reselection, the terminal equipment needs also to measure a neighboring base station, so as to judge whether a neighboring cell has been reselected. The terminal equipment may have reselected a neighboring cell only when the measurement estimation result of the neighboring cell is better than that of the current serving cell within the whole reselection time (i.e. $T_{reselection}$).

In an existing protocol, in order to cope with an effect of a speed of the terminal equipment to its mobility, it is further stipulated to adjust a movement process according to a moving speed of the terminal equipment, mainly adjusting the TTT concerned in the handover process and hysteresis $Q_{Hyst}$ of a measurement result and $T_{reselection}$ in the cell reselection process.

However, in the implementation of the present invention, it was found by the inventors that an effect of a cell size is not taken into account in the movement process. In a heterogeneous network, a cell size changes much. If high-speed terminal equipment is served by a cell of a relatively small size (such as a pico cell, a remote radio head, and a relay, etc.), the high-speed terminal equipment needs to perform handover or cell reselection frequently, thereby being prone to resulting in call drop or service interruption. If normal-speed terminal equipment is served by a macro cell, the terminal equipment will occupy a resource of the macro cell, resulting in reduction of utilization of whole resources. There exists no an effective way addressing the above issue till now.

It should be noted that the above description of the background is merely provided for clear and complete explanation of the present invention and for easy understanding by those skilled in the art. And it should not be understood that the above technical solution is known to those skilled in the art as it is described in the background of the present invention.

Summary

An object of the embodiments of the present invention is to provide a method for selecting a cell, a method for triggering measurement report, a base station and terminal equipment. In this method, by setting a scaling factor set/scaling factor sets, not only a cell size but also an effect of a speed of the terminal equipment to its mobility process is taken into account, thereby avoiding call drop and service interruption, improving spectrum utilization wholly, and ensuring service quality of users at the same time.

According to an aspect of the embodiments of the present invention, there is provided a method for selecting a cell, including:

notifying, by a base station, terminal equipment of a first scaling factor set for scaling hysteresis of a measurement result of a serving cell needed in evaluation of the serving cell, and/or a second scaling factor set for scaling an offset value of a measurement result of a neighboring cell needed in evaluation of the neighboring cell; wherein, the first scaling factor set includes one or more scaling factors, and the second scaling factor set includes one or more scaling factors, the one scaling factor corresponding to a predefined moving speed, and each of the more scaling factors corresponding to a different moving speed.

According to another aspect of the embodiments of the present invention, there is provided a method for selecting a cell, including:

receiving, by terminal equipment, a first scaling factor set for scaling hysteresis of a measurement result of a serving cell needed in evaluation of the serving cell, and/or a second scaling factor set for scaling an offset value of a measurement result of a neighboring cell needed in evaluation of the neighboring cell, notified by a base station of the serving cell; wherein the first scaling factor set includes one or more scaling factors, and the second scaling factor set includes one or more scaling factors, the one scaling factor corresponding to a predefined moving speed, and each of the more scaling factors corresponding to a different moving speed;

selecting a corresponding scaling factor from the first scaling factor set and/or the second scaling factor set according to a moving status of the terminal equipment;

scaling an evaluation result/evaluation results of the serving cell and/or the neighboring cell by using the selected scaling factor, so as to obtain a scaled evaluation result/scaled evaluation results of the serving cell and/or the neighboring cell; and

performing cell reselection by using the scaled evaluation result/scaled evaluation results.

According to still another aspect of the embodiments of the present invention, there is provided a base station, including:

a first notifying unit configured to notify terminal equipment of a first scaling factor set for scaling hysteresis of a measurement result of a serving cell needed in evaluation of the serving cell, and/or a second scaling factor set for scaling an offset value of a measurement result of a neighboring cell needed in evaluation of the neighboring cell; wherein, the first scaling factor set includes one or more scaling factors, and the second scaling factor set includes one or more scaling factors, with the one scaling factor corresponding to a predefined moving speed, and each of the more scaling factors corresponding to a different moving speed.

According to still another aspect of the embodiments of the present invention, there is provided terminal equipment, including:

a second receiving unit configured to receive a first scaling factor set for scaling hysteresis of a measurement result of a serving cell needed in evaluation of the serving cell, and/or a second scaling factor set for scaling an offset value of a measurement result of a neighboring cell needed in evaluation of the neighboring cell, notified by a base station of the serving cell;

wherein the first scaling factor set includes one or more scaling factors, and the second scaling factor set includes one or more scaling factors, with the one scaling factor corresponding to a predefined moving speed, and each of the more scaling factors corresponding to a different moving speed;

a first selecting unit configured to select a corresponding scaling factor from the first scaling factor set and/or the second scaling factor set, according to the moving status of the terminal equipment;

a first scaling unit configured to scale the evaluation result(s) of the serving cell and/or the neighboring cell by using the scaling factor selected by the first selecting unit, so as to obtain a scaled evaluation result/scaled evaluation results of the serving cell and/or the neighboring cell; and

a reselecting unit configured to reselect a cell by using the scaled evaluation result(s).

According to still another aspect of the embodiments of the present invention, there is provided a method for triggering a measurement report, including:

notifying, by a base station, terminal equipment of a third scaling factor set for scaling a measurement result of a serving cell, and/or a fourth scaling factor set for scaling a measurement result of a neighboring cell;

wherein, the third scaling factor set includes one or more scaling factors, and the fourth scaling factor set includes one or more scaling factors, the one scaling factor corresponding to a predefined moving speed, and each of the more scaling factors corresponding to a different moving speed.

According to still another aspect of the embodiments of the present invention, there is provided a method for selecting a cell, including:

notifying, by a base station, terminal equipment of a third scaling factor set for scaling a measurement result of a serving cell, and/or a fourth scaling factor set for scaling a measurement result of a neighboring cell;

wherein, the third scaling factor set includes one or more scaling factors, and the fourth scaling factor set includes one or more scaling factors, the one scaling factor corresponding to a predefined moving speed, and each of the more scaling factors corresponding to a different moving speed;

receiving a measurement report including an unscaled measurement result/unscaled measurement results of the serving cell and/or the neighboring cell, reported by terminal equipment; and

selecting a target cell to which the terminal equipment is to be handed over according to the measurement report and in negotiation with other network-side entities, and notifying the terminal equipment of information including the selected target cell.

According to still another aspect of the embodiments of the present invention, there is provided a method for triggering a measurement report, including:

receiving, by terminal equipment, a third scaling factor set for scaling a measurement result of a serving cell, and/or a fourth scaling factor set for scaling a measurement result of a neighboring cell, notified by a base station of the serving cell;

wherein, the third scaling factor set includes one or more scaling factors, and the fourth scaling factor set includes one or more scaling factors, the one scaling factor corresponding to a predefined moving speed, and each of the more scaling factors corresponding to a different moving speed;

selecting a corresponding scaling factor from the third scaling factor set and/or the fourth scaling factor set, according to the moving status of the terminal equipment;

scaling the measurement result(s) of the serving cell and/or the neighboring cell by using the selected scaling factor, so as to obtain a scaled measurement result/scaled measurement results of the serving cell and/or the neighboring cell;

judging whether a triggering condition to which a triggering event corresponds is satisfied by using the scaled measurement result; and

reporting an unscaled measurement result to the base station, if the triggering condition is satisfied.

According to still another aspect of the embodiments of the present invention, there is provided a method for selecting a cell, including:

receiving, by terminal equipment, a third scaling factor set for scaling a measurement result of a serving cell, and/or a fourth scaling factor set for scaling a measurement result of a neighboring cell, notified by a base station of the serving cell; wherein the third scaling factor set includes one or more scaling factors, and the fourth scaling factor set includes one or more scaling factors, the one scaling factor corresponding to a predefined moving speed, and each of the more scaling factors corresponding to a different moving speed;

selecting a corresponding scaling factor from the third scaling factor set and/or the fourth scaling factor set, according to the moving status of the terminal equipment;

scaling the measurement result(s) of the serving cell and/or the neighboring cell by using the selected scaling factor, so as to obtain a scaled measurement result/scaled measurement results of the serving cell and/or the neighboring cell;

judging whether a triggering condition to which a triggering event corresponds is satisfied by using the scaled measurement result;

reporting an unscaled measurement result to the base station, if the triggering condition is satisfied;

receiving information including a selected target cell, fed back by the base station according to the measurement result(s); and

determining a target cell to be handed over according to the information.

According to still another aspect of the embodiments of the present invention, there is provided a base station, including:

a second notifying unit configured to notify terminal equipment of a third scaling factor set for scaling a measurement result of a serving cell, and/or a fourth scaling factor set for scaling a measurement result of a neighboring cell; wherein, the third scaling factor set includes one or more scaling factors, and the fourth scaling factor set includes one or more scaling factors, the one scaling factor corresponding to a predefined moving speed, and each of the more scaling factors corresponding to a different moving speed.

According to still another aspect of the embodiments of the present invention, there is provided a base station, including:

a third notifying unit configured to notify terminal equipment of a third scaling factor set for scaling a measurement result of a serving cell, and/or a fourth scaling factor set for scaling a measurement result of a neighboring cell; wherein, the third scaling factor set includes one or more scaling factors, and the fourth scaling factor set includes one or more scaling factors, the one scaling factor corresponding to a predefined moving speed, and each of the more scaling factors corresponding to a different moving speed;

a fifth receiving unit configured to receive a measurement report including an unscaled measurement result/unscaled measurement results of the serving cell and/or neighboring cell, reported by terminal equipment; and

a selecting unit configured to select a target cell to which the terminal equipment is to be handed over according to the measurement report(s) and in negotiation with other network-side entities, and notify the terminal equipment of the information including the selected target cell.

According to still another aspect of the embodiments of the present invention, there is provided terminal equipment, including:

a sixth receiving unit configured to receive a third scaling factor set for scaling a measurement result of a serving cell, and/or a fourth scaling factor set for scaling a measurement result of a neighboring cell, notified by a base station of the serving cell;

wherein, the third scaling factor set includes one or more scaling factors, and the fourth scaling factor set includes one or more scaling factors, the one scaling factor corresponding to a predefined moving speed, and each of the more scaling factors corresponding to a different moving speed;

a second selecting unit configured to select a corresponding scaling factor from the third scaling factor set and/or the fourth scaling factor set, according to the moving status of the terminal equipment;

a second scaling unit configured to scale the measurement result(s) of the serving cell and/or the neighboring cell by using the selected scaling factor, so as to obtain a scaled measurement result/scaled measurement results of the serving cell and/or the neighboring cell;

a first judging unit configured to judge whether a triggering condition to which a triggering event corresponds is satisfied by using the scaled measurement result; and

a first reporting unit configured to report an unscaled measurement result/unscaled measurement results of the serving cell and/or the neighboring cell to the base station, if the judgment result of the first judging unit is that the triggering condition is satisfied.

According to still another aspect of the embodiments of the present invention, there is provided terminal equipment, including:

a seventh receiving unit configured to receive a third scaling factor set for scaling a measurement result of a serving cell, and/or a fourth scaling factor set for scaling a measurement result of a neighboring cell, notified by a base station of the serving cell;

wherein, the third scaling factor set includes one or more scaling factors, and the fourth scaling factor set includes one or more scaling factors, the one scaling factor corresponding to a predefined moving speed, and each of the more scaling factors corresponding to a different moving speed;

a third selecting unit configured to select a corresponding scaling factor from the third scaling factor set and/or the fourth scaling factor set, according to the moving status of the terminal equipment;

a third scaling unit configured to scale the measurement result(s) of the serving cell and/or the neighboring cell by using the selected scaling factor, so as to obtain a scaled measurement result/scaled measurement results of the serving cell and/or the neighboring cell;

a second judging unit configured to judge whether a triggering condition to which a triggering event corresponds is satisfied by using the scaled measurement result;

a second reporting unit configured to report an unscaled measurement result to the base station, if the judgment result of the second judging unit is that the triggering condition is satisfied;

an eighth receiving unit configured to receive information including a selected target cell, fed back by the base station according to the measurement result(s); and

a handover unit configured to determine a target cell to be handed over according to the information.

According to still another aspect of the embodiments of the present invention, there is provided a computer-readable program, wherein when the program is executed in a base station, the program enables a computer to carry out the method for selecting cell as described above in the base station.

According to still another aspect of the embodiments of the present invention, there is provided a storing medium in which a computer-readable program is stored, wherein the computer-readable program enables a computer to carry out the method for selecting cell as described above in a base station.

According to still another aspect of the embodiments of the present invention, there is provided a computer-readable program, wherein when the program is executed in user equipment, the program enables a computer to carry out the method for selecting cell as described above in the user equipment.

According to still another aspect of the embodiments of the present invention, there is provided a storing medium in which a computer-readable program is stored, wherein the computer-readable program enables a computer to carry out the method for selecting cell as described above in user equipment.

According to still another aspect of the embodiments of the present invention, there is provided a computer-readable program, wherein when the program is executed in a base station, the program enables a computer to carry out the method for triggering measurement report as described above in the base station.

According to still another aspect of the embodiments of the present invention, there is provided a storing medium in which a computer-readable program is stored, wherein the computer-readable program enables a computer to carry out the method for triggering measurement report as described above in a base station.

According to still another aspect of the embodiments of the present invention, there is provided a computer-readable program, wherein when the program is executed in user equipment, the program enables a computer to carry out the method for triggering measurement report as described above in the user equipment.

According to still another aspect of the embodiments of the present invention, there is provided a storing medium in which a computer-readable program is stored, wherein the computer-readable program enables a computer to carry out the method for triggering measurement report as described above in user equipment.

The advantage of the embodiments of the present invention resides in that a scaling factor set/scaling factor sets is/are set in the method, and a scaling factor/scaling factors in the scaling factor set(s) correspond(s) to different moving speeds, thereby not only a cell size but also an effect of a speed of the terminal equipment to its mobility process being taken into account, making a high-speed terminal receive a service in the macro cell, and making a normal-speed terminal receive a service in a relatively small cell. In this way, the system is wholly improved with respect to spectrum utilization, and guarantees service quality of users.

With reference to the following description and drawings, the particular embodiments of the present invention are disclosed in detail, and the principle of the present invention and the manners of use are indicated. It should be understood that the scope of the embodiments of the present invention is not limited thereto. The embodiments of the present invention contain many alternations, modifications and equivalents within the spirits and scope of the terms of the appended claims.

Features that are described and/or illustrated with respect to one embodiment may be used in the same way or in a similar way in one or more other embodiments and/or in combination with or instead of the features of the other embodiments.

It should be emphasized that the term "includes/including/comprises/comprising" when used in this specification is taken to specify the presence of stated features, integers, steps or components but does not preclude the presence or addition of one or more other features, integers, steps, components or groups thereof.

Brief Description of the Drawings

The above and other objects, features and advantages of the present invention will be apparent from the following detailed description in conjunction with the drawings, in which:

Figure 1 is a schematic diagram of a triggering event and TTT;
Figure 2 is a flowchart of the method for selecting a cell of Embodiment 1 of the present invention;
Figure 3 is a flowchart of the method for selecting a cell of Embodiment 2 of the present invention;
Figure 4 is a schematic diagram of the structure of the base station of Embodiment 3 of the present invention;
Figure 5 is a schematic diagram of a mobile phone used as an example of terminal equipment;
Figure 6 is a schematic diagram of the structure of the terminal equipment of Embodiment 4 of the present invention;
Figure 7 is a flowchart of the method for selecting a cell of Embodiment 5 of the present invention;
Figure 8 shows the method for triggering a measurement report of Embodiment 6 of the present invention;
Figure 9 is a flowchart of the method for selecting a cell of Embodiment 7 of the present invention;
Figure 10 is a flowchart of the method for triggering a measurement report of Embodiment 8 of the present invention;
Figure 11 is a flowchart of the method for selecting a cell of Embodiment 9 of the present invention;
Figure 12 is a schematic diagram of the structure of the base station of Embodiment 10 of the present invention;
Figure 13 is a schematic diagram of the structure of the base station of Embodiment 11 of the present invention;
Figure 14 is a schematic diagram of the structure of the terminal equipment of Embodiment 12 of the present invention;
Figure 15 is a schematic diagram of the structure of the terminal equipment of Embodiment 13 of the present invention;
Figure 16 is a flowchart of the method for selecting a cell of Embodiment 14 of the present invention; and
Figure 17 is a flowchart of the method for selecting a cell of Embodiment 15 of the present invention.

Detailed Description

Various embodiments of the present invention shall be described below with reference to the accompanying drawings. These embodiments are illustrative only and are not intended to limit the present invention. For easy understanding of the principle and embodiments of the present invention by those skilled in the art, the embodiments of the present invention shall be described taking that terminal equipment in an LTE/LTE-A system performs cell reselection and handover as an example. However, it should be understood that the present invention is not limited to such a system/systems, and is applicable to other systems relating to that terminal equipment performs cell reselection and handover.

A handover process of terminal equipment in an existing connected mode shall be described first.

In the connected mode, in order to ensure correct triggering of handover, the terminal equipment needs to perform measurement of radio resource management (RRM). If the measurement result always satisfies a certain condition (referred to as a triggering condition of an event) within a specified period of time (referred to as a time to trigger (TTT)), the terminal equipment will report the measurement result to a base station. The base station may decide whether to start a handover process according to the measurement result.

In 36.331 (V10.2.0) of 3GPP protocol, eight events are specified for a system: A1-A6 and B1-B2, which are used for configuring triggering events of a measurement result reported by terminal equipment.

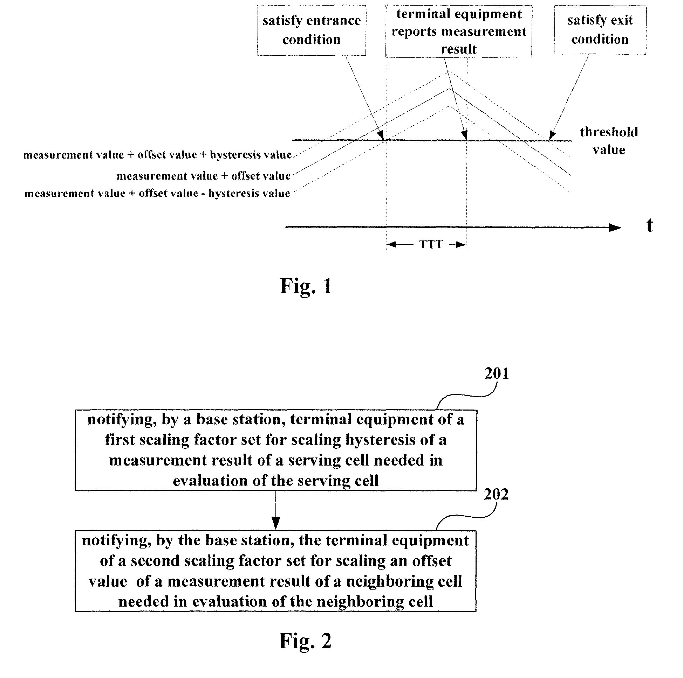

For example, Fig. 1 is a schematic diagram of a triggering event and TTT. As shown in Fig. 1, the triggering event is defined as: a neighboring cell is better than a threshold (i.e. event A4). Corresponding to such an event, an entrance condition and an exit condition are defined:

$$\text{entrance condition: } Mn + Ofn + Ocn - Hys > Thresh \tag{1}$$

$$\text{exit condition: } Mn + Ofn + Ocn + Hys < Thresh \tag{2}$$

where, $M_n$ is a measurement result of a neighboring cell, taking no offset value into account; $Ofn$ is a frequency offset to which a frequency of the neighboring cell corresponds; $Ocn$ is a cell offset to which the neighboring cell corresponds; $Hys$ is a hysteresis value to which this event corresponds; and $Thresh$ is a threshold value to which this event corresponds. In this event, the terminal equipment first judges whether a scaled measurement result of the neighboring cell satisfies the entrance condition, i.e. formula (1). If the entrance condition is satisfied, and is satisfied during the whole TTT, a measurement report shall be triggered, reporting the measurement result of the neighboring cell to the base station.

Different setting of a triggering event may affect measurement results of which of the cells can be reported by the terminal equipment to a network side, thereby indirectly affecting selection by the network side of a target cell to be handed over. And at the same time, as the terminal equipment is movable, different setting of a triggering event may affect TTT of a measurement report, thereby affecting the time of occurrence of handover. Reasonable setting of a triggering event is helpful to reasonable selection of a target cell to be handed over and timely handover.

Likewise, in the idle mode, when the terminal equipment performs cell reselection, the terminal equipment needs also to measure a neighboring base station, so as to judge whether a neighboring cell is reselected to. The terminal equipment may reselect to a neighboring cell only when the measurement estimation result of the neighboring cell is better than that of the current serving cell within the whole reselection time (i.e. $T_{reselection}$). In performing estimation on a serving cell and a neighboring cell at the same frequency or a cell of the same priority at a different frequency, the estimation needs to be performed as per the following R rules:

$$R_S = Q_{meas,s} + Q_{Hyst} \tag{3}$$

$$R_n = Q_{meas,n} - Qoffset \tag{4}$$

where, $R_S$ is a result of estimation performed by the terminal equipment to the serving cell, $Q_{meas,s}$ is a result of reference signal receiving power (RSRP) measurement performed by the terminal equipment to the serving cell, $Q_{Hyst}$ is hysteresis of the measurement result, $Q_{meas,n}$ is a result of RSRP measurement performed by the terminal equipment to the neighboring cell, and *Qoffset* is an offset of the measurement result of the neighboring cell.

When the neighboring cell is a cell at the same frequency and there exists an offset (i.e. $Qoffset_{s,n}$) for each neighboring cell, the offset of the neighboring cell is $Qoffset_{s,n}$; and if the system is not configured with effective $Qoffset_{s,n}$, the offset of the neighboring cell is 0. And when the neighboring cell is a cell at a different frequency, if there exists an offset (i.e. $Qoffset_{s,n}$) for each neighboring cell, the offset of the neighboring cell is a sum of the offset ($Qoffset_{frequency}$) for each frequency and the offset ($Qoffset_{s,n}$) for neighboring cell; and if there exists no offset ($Qoffset_{s,n}$) for neighboring cell, the offset of the neighboring cell is the offset ($Qoffset_{frequency}$) *for* each frequency. After evaluating the serving cell and the neighboring cell according to formulae (3) and (4), the terminal equipment performs sorting according to an evaluation result; and when an evaluation result of a new cell is better than that of the serving cell during the whole reselection time (i.e. $T_{reselection}$), that is, Rn is greater than Rs, if the terminal equipment has camped in the current serving cell for more than 1 seconds, the terminal equipment will reselect to a new cell of a best evaluation result.

Furthermore, in the idle mode, for neighboring cells at frequencies of different priorities, including neighboring cells of different communication systems, in cell reselection, it is first judged whether a neighboring cell satisfies a cell reselection condition. The judgment is mainly performed by comparing a measurement value of the current serving cell with a measurement value of the neighboring cell. If there exist several cells at frequencies of different priorities satisfying the cell reselection condition, sorting needs to be performed first according to the frequency priorities, and cells at frequencies of higher priorities have higher priorities in cell reselection; and then, if the frequency of a highest priority is an evolved UMTS terrestrial radio access network (E-UTRAN) frequency, the cells at the frequency of the highest priority shall be sorted according to the R rules; and if the frequency of a highest priority is another system frequency, estimation is performed according to an estimation rule corresponding to the system frequency.

In a protocol, in order to overcome the effect of the moving speed of terminal equipment to its mobility, it is further provided that a moving process may be adjusted according to the moving speed of the terminal equipment, mainly adjusting TTT concerned in a handover process and $Q_{Hyst}$ and $T_{reselection}$ in a cell reselection process. In particular, first, the terminal equipment will detect whether its moving status is in "high speed", "intermediate speed" or "normal speed" by using a terminal speed detection method. And at the same time, a base station will broadcast a set of factors (including factors corresponding to the high speed and the intermediate speed) for scaling $Q_{Hyst}$ and $T_{reselection}$, and will notify the terminal equipment of a set of factors (including factors corresponding to the high speed and the intermediate speed) for scaling TTT via specific signaling. After obtaining a corresponding scaling factor set, the terminal equipment may adjust a moving process according to the moving status of itself, multiplying the TTT in the handover process by a corresponding scaling factor (the value of the factor being not greater than 1), adding a corresponding scaling factor (the value of the factor being not greater than 0) to $Q_{Hyst}$ in the reselection process, and multiplying $T_{reselection}$ in the reselection process by a corresponding scaling factor (the value of the factor being not greater than 1).

It can be seen from above that during the movement of the terminal equipment, only the effect of the speed of the terminal equipment on the moving process is taken into account. And scaling of $T_{reselection}$ and TTT can only affect a time of handover/cell reselection, and scaling of $Q_{Hyst}$ can also only affect evaluation of the serving cell, both of which being unable to affect a target cell to be handed over or a reselected cell.

An effect of a cell size is not taken into account in the above processes. In a heterogeneous network, a cell size changes much. If high-speed terminal equipment is made to receive a service of a cell of a relatively small size (such as a pico cell, a remote radio head, and a relay, etc.), the high-speed terminal equipment needs to perform handover or cell reselection frequently, thereby being prone to resulting in call drop or service interruption. If normal-speed terminal equipment is made to receive a service of a macro cell, the terminal equipment will occupy a resource of the macro cell, resulting in reduction of utilization of whole resources.

Hence, in order to solve the above problem, an embodiment of the present invention provides a more reasonable method for selecting a cell, that is, making high-speed terminal equipment receive a service in a macro cell, and making normal-speed terminal equipment receive a service in a cell of a relatively small size. In this way, the system not only is wholly improved with respect to spectrum utilization, but also guarantees service quality of users.

Embodiments of the present invention shall be described in detail below with reference to the accompanying drawings.

The method for reselecting a cell in an idle mode shall be described below with reference to the accompanying drawings.

Fig. 2 is a flowchart of the method for selecting a cell of Embodiment 1 of the present invention. As shown in Fig 2, at a network side, the method includes:

step 201: notifying, by a base station, terminal equipment of a first scaling factor set for scaling hysteresis $Q_{Hyst}$ of a measurement result of a serving cell needed in evaluation of the serving cell;

in this embodiment, the base station is a base station of a primary serving cell of the terminal equipment, and the measurement result may be, for example, a measurement result of reference signal receiving power (RSRP);

in this embodiment, for each cell, the first scaling factor set may include one or more scaling factors; and for the case where one scaling factor is included, the scaling factor corresponds to a predefined moving speed, for example, it corresponds to a high speed or an intermediate speed, and the scaling factors to which other speeds correspond may be defaulted as 0; and for the case where more than one scaling factors are included, each of the more than one scaling factors corresponds to a different moving speed, respectively; for example, a high speed or intermediate speed corresponds to a different scaling factor, respectively, and in this case, the scaling factor corresponding to a normal speed may be defaulted as 0; and three scaling factors corresponding respectively to a high speed, an intermediate speed and a normal speed may also be included;

furthermore, the type of the scaling factor(s) included in the first scaling factor set may be scaling factor(s) ($q$ - $HystSF_{frequency}$) for the frequency of the serving cell, that is, scaling factor sets are identical only if the scaling factor(s) is/are at the same frequency; or the scaling factor(s) included in the first scaling factor set may be scaling factor(s) ($q$-$HystSF_{cell}$) for each cell, that is, different cells have different scaling factors, no matter whether their frequencies are identical; or the above two types of scaling factors, i.e. scaling factor(s) for the frequency of the serving cell and the scaling factor(s) for each cell, may be included in the first scaling factor set at the same time;

the above scaling factor set may be set by an operator as actually required; for example, in network deployment by the operator, if cell sizes are different at different frequencies, but cell sizes are substantially the same at the same frequency, scaling factor(s) for the frequency (frequencies) may be set; and in network deployment by the operator, if cell sizes are largely different at the same frequency, scaling factors for different cells are needed; of course, the two types of scaling factors may be present at the same time. In setting a value of a scaling factor, an effect of a cell size on the scaling factor needs to be taken into account, and the scaling factor may be greater than 0 (a value of the scaling factor $q$ - $HystSF_{cell}$ for $Q_{Hyst}$ in a current protocol is not more than 0 and is only for the serving cell), and may also be less than 0, that is, the scaling factor(s) included in the first scaling factor set may be an arbitrary value/values; for example, if a cell size is relatively large, the faster the speed of the terminal equipment is, the greater the scaling factor(s) is/are; and when the cell size is relatively small, the faster the speed of the terminal equipment is, the smaller the scaling factor(s) is/are.

In this embodiment, a cell of a larger size generally refers to a macro cell, and a cell of a smaller size generally refers to a pico cell, a radio remote head, a relay, or a home cell, etc.;

in this embodiment, the speed of the terminal equipment is generally determined by an operator; for example, the operator may preset 2 threshold values, and the first one is greater than the second one; when the number of times of handover of the terminal equipment exceeds the first threshold value in a certain period of time, the moving speed of the terminal equipment is a high speed; when the moving speed of the terminal equipment is between the first threshold value and the second threshold value, the moving speed of the terminal equipment is an intermediate speed; and when the moving speed of the terminal equipment is less than the second threshold value, the moving speed of the terminal equipment is a normal speed; wherein, the first threshold value and the second threshold value may be set as actually required by the network; for example, the first threshold value may be 20, and the second threshold value may be 10, and they may also be set as corresponding values as actually required;

step 202: notifying, by the base station, the terminal equipment of a second scaling factor set for scaling an offset value $Qoffset$ of a measurement result of a neighboring cell needed in evaluation of the neighboring cell;

wherein, the measurement result may be, for example, a measurement result of reference signal receiving power (RSRP), and the second scaling factor set includes one or more scaling factors; for the case where one scaling factor is included, the scaling factor corresponds to a predefined moving speed, for example, it corresponds to a high speed or an intermediate speed, and the scaling factors to which other speeds correspond may be defaulted as 0; and for the case where more than one scaling factors are included, each of the more than one scaling factors corresponds to a different moving speed, respectively; for example, a high speed or intermediate speed corresponds to a different scaling factor, respectively, and in this case, the scaling factor corresponding to a normal speed may be deemed as 0; and three scaling factors corresponding respectively to a high speed, an intermediate speed and a normal speed may also be included;

furthermore, the scaling factor(s) included in the second scaling factor set may be scaling factor(s) ($q$ - $OffsetSF_{frequency}$) *for* the frequency of a neighboring cell, that is, scaling factor sets are identical only if the scaling factor(s) is/are at the same frequency; or the scaling factor(s) included in the second scaling factor set may be scaling factor(s) ($q$ - $OffsetSF_{cell}$) for each cell, that is, different cells have different scaling factors, no matter whether their frequencies are identical; or the above two types of scaling factors, i.e. scaling factor(s) for the frequency of the neighboring cell and the scaling factor(s) for each cell, may be included in the second scaling factor set at the same time;

the above scaling factor set may be set by an operator as actually required; for example, in network deployment by the operator, if cell sizes are different at different frequencies, but cell sizes are substantially the same at the same frequency, scaling factor(s) for the frequency (frequencies) may be set; and in network deployment by the operator, if cell sizes are largely different at the same frequency, scaling factors for different cells are needed; of course, the two types of scaling factors may be present at the same time; in setting a value of a scaling factor, an effect of a cell size on the scaling factor needs to be taken into account, and the scaling factor may be greater than, equal to or less than 0, that is, it may be an arbitrary value; for example, if a cell size is relatively large, the faster the speed of the terminal equipment is, the greater the scaling factor(s) is/are; and when the cell size is relatively small, the faster the speed of the terminal equipment is, the smaller the scaling factor(s) is/are.

In the above embodiment, steps 201 and 202 may not be executed orderly, they may be executed in order or at the same time, and one of them may be execute, for example, step 202 is executed, but step 201 is not.

In this embodiment, the method may further include a step of: receiving, by the base station, the first scaling factor set and/or the second scaling factor set transmitted by a network-side functional entity;

wherein, the scaling factors in the first scaling factor set and the second scaling factor set may be set by the network-side functional entity and transmitted to the base station. The network-side functional entity may be a base station of a neighboring cell at the network side, and may also be a network-side management functional entity, etc.

Furthermore, in notifying the terminal equipment of the above scaling factor sets by the base station, after receiving the above scaling factor sets, the terminal equipment may select a corresponding scaling factor according to a moving status of the terminal equipment, determine a scaled cell evaluation result by using the scaling factor, and perform cell reselection according to the evaluation result.

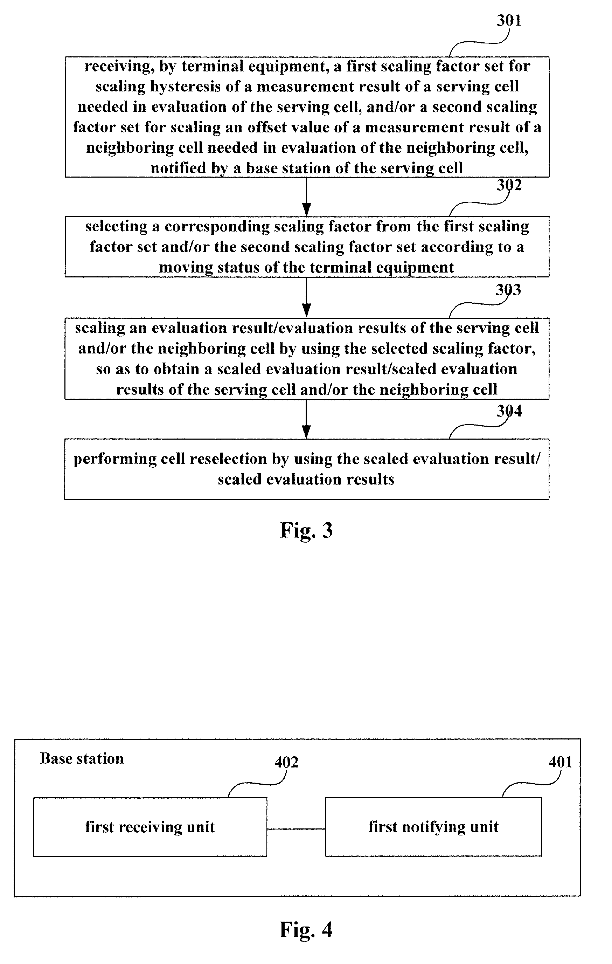

Fig. 3 is a flowchart of the method for selecting a cell of Embodiment 2 of the present invention. As shown in Fig 3, at a terminal equipment side, the method includes:

step 301: receiving, by terminal equipment, a first scaling factor set for scaling hysteresis of a measurement result of a serving cell needed in evaluation of the serving cell, and/or a second scaling factor set for scaling an offset value of a measurement result of a neighboring cell needed in evaluation of the neighboring cell, notified by a base station of the serving cell;

in this embodiment, the measurement result may be, for example, a measurement result of reference signal receiving power (RSRP), the first scaling factor set is as described in step 201 in Embodiment 1, and the second scaling factor set is as described in step 202 in Embodiment 1, which shall not be described herein any further;

step 302: selecting a corresponding scaling factor from the first scaling factor set and/or the second scaling factor set according to a moving status of the terminal equipment;

in this embodiment, the moving status of the terminal equipment refers to an estimated value of a moving speed of the terminal equipment, which may be obtained by using any existing technique, and shall not be described herein any further; for example, the moving speed of the terminal equipment may be detected as a high speed, an intermediate speed or a normal speed, as described in Embodiment 1; in this way, the terminal equipment may select a corresponding scaling factor from the first scaling factor set and/or the second scaling factor set according to its moving status;

when the first or the second scaling factor sets include only a scaling factor to which one moving speed corresponds, it is deemed that the scaling factors to which other moving speeds correspond are 0; hence, in such a case, the terminal equipment may still select a corresponding scaling factor according to the moving speed;

step 303: scaling an evaluation result/evaluation results of the serving cell and/or the neighboring cell by using the selected scaling factor, so as to obtain a scaled evaluation result/scaled evaluation results of the serving cell and/or the neighboring cell;

in this embodiment, the selected scaling factor and the evaluation result/scaled evaluation results are added up, so as to obtain a scaled evaluation result/scaled evaluation results of the serving cell and/or the neighboring cell; for example, the selected scaling factor is added to formulae (3) and (4), so as to obtain a scaled evaluation result/scaled evaluation results, the scaled evaluation result/scaled evaluation results may be expressed by formulae (5) and (6) below:

$$R_S^{'} = Q_{meas,s} + Q_{Hyst} + (q - HystSF) \qquad (5)$$

$$R_n^{'} = Q_{meas,n} - Qoffset + (q - OffsetSF) \qquad (6)$$

where, $R_S{'}$ denotes the scaled evaluation result of the serving cell, $R_n{'}$ denotes the scaled evaluation result of the neighboring cell, $(q - HystSF)$ denotes the scaling factor for scaling $Q_{Hyst}$ selected by the terminal equipment, and $(q - OffsetSF)$ denotes the scaling factor for scaling $Qoffset$ selected by the terminal equipment;

in a scaling factor set, when the scaling factor is only a scaling factor for a frequency or a scaling factor for different cells, the value of the scaling factor (*q-HystSF*) is ($q$ - $HystSF_{frequency}$) or ($q$ - $HystSF_{cell}$), and the value of the scaling factor (*q* - *OffsetSF*) is ($q$ - $OffsetSF_{frequency}$) or ($q$ - $OffsetSF_{cell}$);

in a scaling factor set, when the scaling factor is a scaling factor for a frequency and for different cells, the value of the scaling factor (*q* - *HystSF*) is ($q$ - $HystSF_{frequency}$) + ($q$ - $HystSF_{cell}$), and the value of the scaling factor (*q* - *OffsetSF*) is ($q$ - $OffsetSF_{frequency}$)+($q$-$OffsetSF_{cell}$);

step 304: performing cell reselection by using the scaled evaluation result/scaled evaluation results;

in this embodiment, similar to the relevant art, the terminal equipment may sort the scaled evaluation result/scaled evaluation results, and when an evaluation result of a new cell within a whole reselection time ($T_{reselection}$) is better than an evaluation result of the serving cell and the terminal equipment has camped on the current serving cell for more than 1 seconds, the terminal equipment needs to reselect to a new cell with a best evaluation result.

It can be seen from the above embodiment that in step 301, the terminal equipment may receive only the first scaling factor set or only the second scaling factor set, or may receive the first scaling factor set and the second scaling factor set, and corresponding selection and scaling are performed in steps 302 and 303 accordingly.

It can be seen from the above embodiment that the base station notifies the terminal equipment of scaling factor set(s), for each cell, each scaling factor in the scaling factor set(s) corresponding to different move statuses; the terminal equipment may select a corresponding scaling factor according to its moving status to scale an evaluation result/evaluation results of the serving cell and/or a neighboring cell, and then perform cell reselection according to the scaled evaluation result/evaluation results. In this way, the base station needs no to notify the terminal equipment of sizes of the neighboring cell and the serving cell, making signaling overhead relatively low; and a reselected cell in the cell reselection may be optimized, thereby enabling faster terminal equipment to select more relatively large cells, slower terminal equipment to select relatively small cells, and avoiding call drop or service interruption. Therefore, the system not only is wholly improved with respect to spectrum utilization, but also guarantees service quality of users, solving the above problems existed in the relevant art.

A person of ordinary skill in the art may understand that all or part of the steps in the method carrying out the above embodiment may be carried out by related hardware instructed by a program. The program may be stored in a computer-readable storage medium. And when being executed, the program may include all or part of the steps in the method in the above embodiment, and the storage medium may include an ROM, an RAM, a floppy disc, and a compact disc, etc.

Embodiments of the present invention further provide a base station and terminal equipment, as described in the embodiments below. As the principles of the base station and terminal equipment for solving problems are similar to those of the above methods for selecting a cell based on a base station and terminal equipment, the implementation of the methods may be referred to for the implementation of the a base station and terminal equipment, and the repeated parts shall not be described any further.

Fig. 4 is a schematic diagram of the structure of the base station of Embodiment 3 of the present invention. As shown in Fig. 4, the base station includes a first notifying unit 401; wherein,

the first notifying unit 401 is configured to notify terminal equipment of a first scaling factor set for scaling hysteresis of a measurement result of a serving cell needed in evaluation of the serving cell, and/or a second scaling factor set for scaling an offset value of a measurement result of a neighboring cell needed in evaluation of the neighboring cell;

wherein, the first scaling factor set includes one or more scaling factors, and the second scaling factor set includes one or more scaling factors, with the one scaling factor corresponding to a predefined moving speed, and each of the more scaling factors corresponding to a different moving speed.

In this embodiment, the first scaling factor set and the second scaling factor set are similar to those described in steps 201 and 202 in Embodiment 1, which shall not be described herein any further.

In this embodiment, as shown in Fig. 4, the base station further includes a first receiving unit 402 configured to receive the first scaling factor set and/or the second scaling factor set transmitted by a network-side functional entity. Furthermore, a storage unit (not shown) is included, which is configured to store the above first scaling factor set and/or the second scaling factor set;

wherein, the network-side functional entity may be a base station of any neighboring cell at the network side, and may also be a network-side management functional entity, etc.

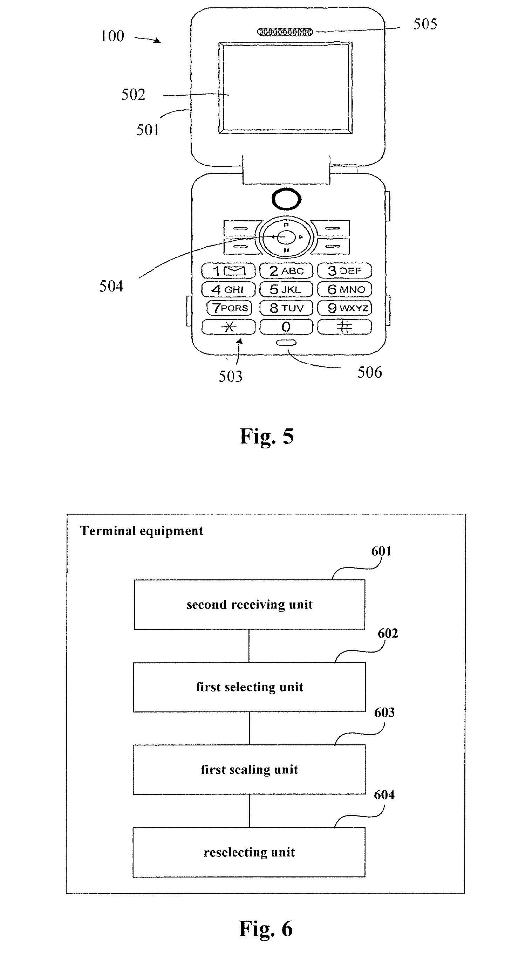

Fig. 5 is a schematic diagram of a mobile phone used as an example of terminal equipment. Examples of the terminal equipment are not limited to a mobile phone. And the terminal equipment may also be any devices capable of communicating, such as a game player, a PDA, and a portable computer, etc.

As shown in Fig. 5, the mobile phone 100 may be a flip-lid phone having a flip lid 501 movable between an open position and a closed position. In Fig. 5, the flip lid 501 is shown as being in the open position. It should understood that the mobile phone 100 may also be of other structures, such as a "bar phone" or a "slide-lip phone" structure.

The mobile phone 100 may include a display 502. The display 502 displays such information to a user as an operational state, time, phone number, telephone directory information, and various menus, etc., so that the user is enabled to use various characteristics of the mobile phone 100. The display 502 may also be used to visibly display contents received by the mobile phone 100 and/or retrieved from a memory (not shown) of the mobile phone 100. The display 502 may be used to display images, videos and other graphics to a user, such as photos, mobile TV contents and videos related to games, etc.

A keyboard 503 provides multiple user input operations. For example, the keyboard 503 may include an alphanumeric key permitting input of alphanumeric information (such as a phone number, a phone list, telephone directory information, a notebook, and a text, etc.). Furthermore, the keyboard 503 may include specific functional keys 504, such as a "call transmit" key to initiate a call or respond a call, and a "call end" key to end or "hang up" a call. The specific functional keys may further include a menu navigation key and a selection key on the menu of the display 502 for convenient navigation. For example, a pointing device and/or a navigation key may be provided to receive directional input from a user. Furthermore, the display 502 and the keyboard 503 may be combined in use for carrying out a function of a soft key. The mobile phone 100 may further include parts necessary for carrying out its functions, such as an antenna, a microcontroller, a loudspeaker 505, and a microphone 506, etc.

Fig. 6 is a schematic diagram of the structure of the terminal equipment of Embodiment 4 of the present invention. As terminal equipment of the embodiment of the present invention, as shown in Fig. 6, the terminal equipment includes a second receiving unit 601, a first selecting unit 602, a first scaling unit 603 and a reselecting unit 604; wherein,

the second receiving unit 601 is configured to receive a first scaling factor set for scaling hysteresis of a measurement result of a serving cell needed in evaluation of the serving cell, and/or a second scaling factor set for scaling an offset value of a measurement result of a neighboring cell needed in evaluation of the neighboring cell, notified by a base station of the serving cell; wherein the first scaling factor set includes one or more scaling factors, and the second scaling factor set includes one or more scaling factors, with the one scaling factor corresponding to a predefined moving speed, and each of the more scaling factors corresponding to a different moving speed;

the first selecting unit 602 is configured to select a corresponding scaling factor from the first scaling factor set and/or the second scaling factor set according to the moving status of the terminal equipment;

the first scaling unit 603 is configured to scale the evaluation result(s) of the serving cell and/or the neighboring cell by using the scaling factor selected by the first selecting unit 602, so as to obtain a scaled evaluation result/scaled evaluation results of the serving cell and/or the neighboring cell; and

the reselecting unit 604 is configured to reselect a cell by using the scaled evaluation result(s).

In the above embodiment, the first scaling factor set and the second scaling factor set are as described in steps 201 and 202 in Embodiment 1, which shall not be described herein any further.

The first selecting unit 602 may select a corresponding scaling factor according to a moving speed of the terminal equipment, and a particular manner of selection is as described in step 302 in Embodiment 2, which shall not be described herein any further.

A particular manner of scaling the estimation result by the first scaling unit 603 is as described in step 303 in Embodiment 2, which shall not be described herein any further.

A particular manner of performing cell reselection by the reselecting unit 604 is as described in step 304 in Embodiment 2, which shall not be described herein any further.

In this way, the base station may receive a scaling factor set/scaling factor sets configured by the network side, and notify the terminal equipment of the scaling factor set(s), each scaling factor in the scaling factor set(s) corresponding to different move statuses; the terminal equipment may select a corresponding scaling factor according to its moving status after receiving the scaling factor set(s) to scale an evaluation result/evaluation results of the serving cell and/or a neighboring cell, and then perform cell reselection according to the scaled evaluation result/evaluation results. In this way, the base station needs no to notify the terminal equipment of sizes of the neighboring cell and the serving cell, making signaling overhead relatively low; and a reselected cell in the cell reselection may be optimized, thereby enabling faster terminal equipment to select more relatively large cells, slower terminal equipment to select relatively small cells, and avoiding call drop or service interruption. Therefore, the system not only is wholly improved with respect to spectrum utilization, but also guarantees service quality of users, solving the above problems existed in the relevant art.

Examples of application of the method for selecting a cell shall be explained below with reference to the accompanying drawings. The explanation shall be given taking that the scaling factor set(s) include(s) three scaling factor corresponding to a high speed, an intermediate speed and a normal speed, as examples.

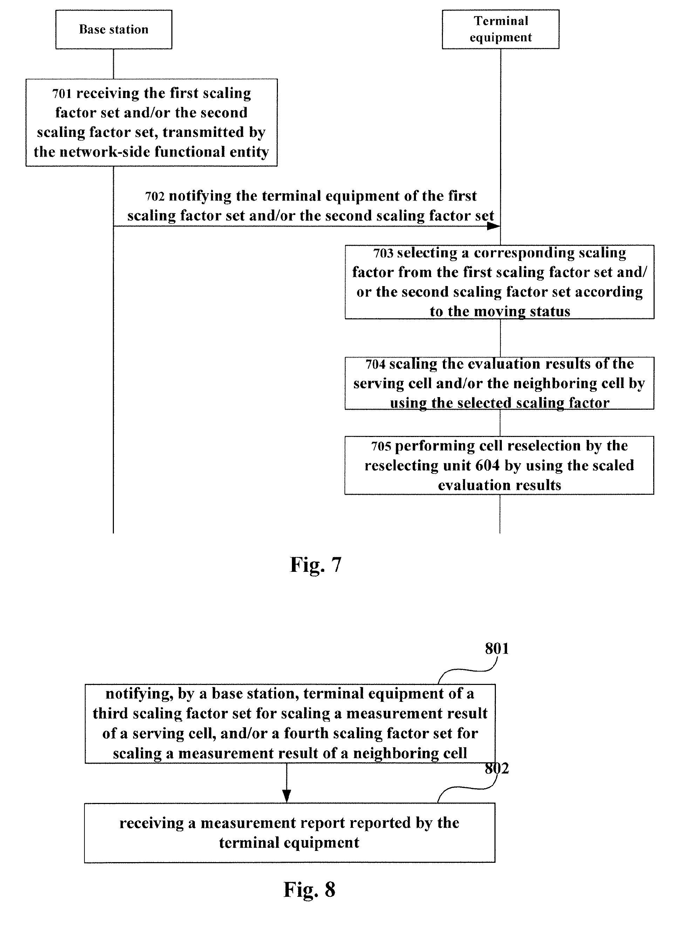

Fig. 7 is a flowchart of the method for selecting a cell of Embodiment 5 of the present invention. As shown in Fig. 7, the method includes:

step 701: receiving, by the base station, the first scaling factor set and/or the second scaling factor set, transmitted by the network-side functional entity;

in this embodiment, the first notifying unit 401 of the base station receives the first scaling factor set and/or the second scaling factor set transmitted by the network-side functional entity;

wherein, the first scaling factor set and the second scaling factor set are set by the network-side functional entity and are transmitted to the base station; for example, the network-side functional entity may be a base station of a neighboring cell, etc.;

in this embodiment, the first scaling factor set and the second scaling factor set may be set as per actual network deployment, and a setting manner is as described in Embodiment 1;

for example, in setting the first scaling factor set, in network deployment by the operator, if cell sizes are different at different frequencies, but cell sizes are substantially the same at the same frequency, scaling factor(s) ($q$ - $HystSF_{frequency}$) for the frequency (frequencies) may be set; and in network deployment by the operator, if cell sizes are largely different at the same frequency, scaling factors ($q$ - $HystSF_{cell}$) for different cells are needed; of course, the two types of scaling factors may be present at the same time; for example, when neighboring cells are at different frequencies, sizes of cells at some frequencies are substantially the same, and $q$ - $HystSF_{frequency}$ is used; and sizes of cells at some frequencies change much, and $q$ - $HystSF_{cell}$ is used;

for example, in setting the second scaling factor set, in network deployment by the operator, if cell sizes are different at different frequencies, but cell sizes are substantially the same at the same frequency, scaling factor(s) ($q$ - $QoffsetSF_{frequency}$) for the frequency (frequencies) may be set; and in network deployment by the operator, if cell sizes are largely different at the same frequency, scaling factors ($q$ - $QoffsetSF_{cell}$) for different cells are needed; of course, the two types of scaling factors may be present at the same time; for example, when neighboring cells are at different frequencies, sizes of cells at some frequencies are substantially the same, and $q$ - $HystSF_{frequency}$ is used; and sizes of cells at some frequencies change much, and $q$ - $HystSF_{cell}$ is used;

in this embodiment, for example, in the first and second scaling factor sets, in setting a value of a scaling factor, an effect of a cell size on the scaling factor needs to be taken into account, and the scaling factor $q$ - $HystSF$ may be an arbitrary value, and the scaling factor $q$ - $QoffsetSF$ may be an arbitrary value;

for example, if a cell size is relatively large, the faster the speed of the terminal equipment is, the greater the scaling factor is; and if the cell size is relatively small, the faster the speed of the terminal equipment is, the smaller the scaling factor is,

step 702: notifying the terminal equipment of the first scaling factor set and/or the second scaling factor set by the first notifying unit 401 of the base station;

in this way, the second receiving unit 601 of the terminal equipment receives the first scaling factor set and/or the second scaling factor set transmitted by the first notifying unit 401.

step 703: selecting a corresponding scaling factor from the first scaling factor set and/or the second scaling factor set by the first selecting unit 602 according to the moving status of the terminal equipment, after the terminal equipment receives the first scaling factor set and/or the second scaling factor set;

in this embodiment, for example, it can be detected that the moving status of the terminal equipment is at a high speed, and the terminal equipment may select a scaling factor to which the high speed corresponds.

step 704: scaling the evaluation results of the serving cell and the neighboring cell by the first scaling unit 603 by using the selected scaling factor, so as to obtain scaled evaluation results of the serving cell and the neighboring cell;

in this embodiment, the scaled evaluation results may be calculated by using the above formulae (5) and (6); wherein, the scaling factor ($q$ - $HystSF$) = ($q$ - $HystSF_{frequency}$) + ($q$ - $HystSF_{cell}$), and the scaling factor ($q$ - $OffsetSF$) = ($q$ - $OffsetSF_{frequency}$) + ($q$ - $OffSetSF_{cell}$).

step 705: performing cell reselection by the reselecting unit 604 by using the scaled evaluation results;

in this embodiment, it is similar to the relevant art, which shall not be described herein any further.

It can be seen from the above embodiment that the base station notifies the terminal equipment of the scaling factor set(s), each scaling factor in the scaling factor set(s) corresponding to different move statuses; the terminal equipment may select a corresponding scaling factor according to its moving status, and the base station needs no to notify the terminal equipment of sizes of the neighboring cell and the serving cell, making signaling overhead relatively low; and a reselected cell in the cell reselection may be optimized, thereby enabling faster terminal equipment to select more relatively large cells, slower terminal equipment to select relatively small cells, and solving the above problems existed in the relevant art.

The method for selecting a cell and a method for triggering a measurement report in a connected mode shall be described below with reference to the accompanying drawings.

Fig. 8 shows the method for triggering a measurement report of Embodiment 6 of the present invention. As shown in Fig. 8, at the network side, the method includes:

step 801: notifying, by a base station, terminal equipment of a third scaling factor set for scaling a measurement result of a serving cell, and/or a fourth scaling factor set for scaling a measurement result of a neighboring cell;

wherein, the third scaling factor set includes one or more scaling factors, and the fourth scaling factor set includes one or more scaling factors, the one scaling factor corresponding to a predefined moving speed, and each of the more scaling factors corresponding to a different moving speed;

in this embodiment, the base station is a base station of a primary serving cell of the terminal equipment;

in this embodiment, the third scaling factor set and the fourth scaling factor set may include one scaling factor, which corresponds to a moving speed; in such a case, scaling factors to which other moving speeds correspond may be defaulted as 0; furthermore, they may also include more than one scaling factors, each corresponding to a different moving speed, respectively; for example, a high speed or intermediate speed corresponds to a different scaling factor, respectively, and in this case, the scaling factor corresponding to a normal speed may be deemed as 0; and three scaling factors corresponding respectively to a high speed, an intermediate speed and a normal speed may also be included;

furthermore, the scaling factor(s) included in the third scaling factor set may be scaling factor(s) for the frequency of the serving cell, that is, scaling factor sets are identical only if the scaling factor(s) is/are at the same frequency; or the scaling factor(s) included in the third scaling factor set may be scaling factor(s) for each cell, that is, different cells have different scaling factor, no matter whether their frequencies are identical; or the above two types of scaling factors, i.e. scaling factor(s) for the frequency of the serving cell and the scaling factor(s) for each cell, may be included in the third scaling factor set at the same time;

the scaling factor(s) included in the fourth scaling factor set may be scaling factor(s) for the frequency of a neighboring cell, that is, scaling factor sets are identical only if the scaling factor(s) is/are at the same frequency; or the scaling factor(s) included in the fourth scaling factor set may be scaling factor(s) for each cell, that is, different cells have different scaling factor, no matter whether their frequencies are identical; or the above two types of scaling factors, i.e. scaling factor(s) for the frequency of the neighboring cell and the scaling factor(s) for each cell, may be included in the fourth scaling factor set at the same time;

and the above third and fourth scaling factor sets may be set by an operator as actually required; for example, in network deployment by the operator, if cell sizes are different at different frequencies, but cell sizes are substantially the same at the same frequency, scaling factor(s) for the frequency (frequencies) may be set; and in network deployment by the operator, if cell sizes are largely different at the same frequency, scaling factors for different cells are needed; of course, the two types of scaling factors may be present at the same time; in setting a value of a scaling factor, an effect of a cell size on the scaling factor needs to be taken into account, and the scaling factor may be greater than, equal to or less than 0, that is, it may be an arbitrary value; for example, if a cell size is relatively large, the faster the speed of the terminal equipment is, the greater the scaling factor(s) is/are; and when the cell size is relatively small, the faster the speed of the terminal equipment is, the smaller the scaling factor(s) is/are;

wherein, the cell size and speed of the terminal equipment are as described in Embodiment 1, which shall not be described herein any further.

In this embodiment, the method may further include: receiving, by the base station, the third scaling factor set and/or the fourth scaling factor set transmitted by the network-side functional entity; wherein, the network-side functional entity is as described above, which shall not be described herein any further.

In the above embodiment, in step 801, the base station may notify the terminal equipment of one of the third scaling factor set and the fourth scaling factor set, or the third scaling factor set and the fourth scaling factor set, according to a particular triggering event. For example, for the event A4, only the fourth scaling factor set needs to be notified; and for the event A3, the third scaling factor set and the fourth scaling factor set need to be notified.

The terminal equipment may select a corresponding scale factor according to the moving status of its own after receiving the scaling factor set notified by the base station, scale a measurement result of a cell, and judge whether a certain condition (i.e. an entrance condition) is satisfied by using the scaled measurement result. If the entrance condition of the event is satisfied within TTT, the terminal equipment reports a measurement report including a measurement result to the base station; wherein, the measurement result included in the measurement report is the measurement result before scaling, that is, a result of direct measurement of a signal.

In such a case, in this embodiment, the method may further include a step 802: receiving, by the base station, a measurement report including an unscaled measurement result/unscaled measurement results of the serving cell and/or the neighboring cell, reported by the terminal equipment. In this way, the base station may select a target cell to be handed over for the terminal equipment.

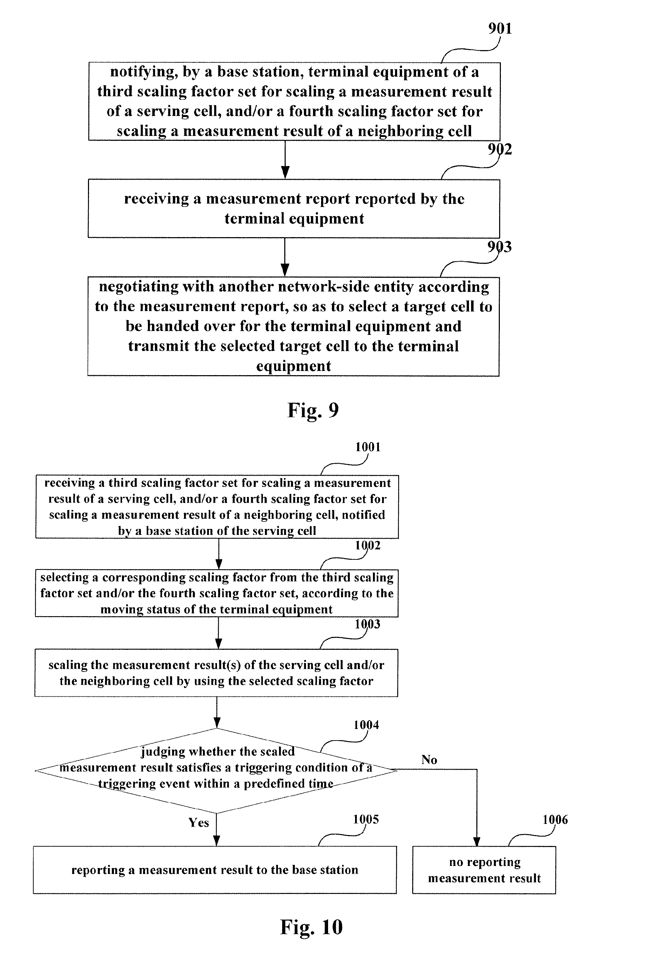

Fig. 9 is a flowchart of the method for selecting a cell of Embodiment 7 of the present invention. At the network side, the method includes:

steps 901-902, which are similar to steps 801-802 in Embodiment 6, and shall not be described herein any further.

Furthermore, as shown in Fig. 9, the method may include step 903: negotiating, by the base station, with another network-side entity according to the measurement report reported by the terminal equipment, so as to select a target cell to be handed over for the terminal equipment and transmit the selected target cell to the terminal equipment; wherein, this step is similar to the relevant art, and shall not be described herein any further. Furthermore, in transmitting the selected target cell to be handed over by the base station to the terminal equipment, related configuration information may also be included.

Fig. 10 is a flowchart of the method for triggering a measurement report of Embodiment 8 of the present invention. As shown in Fig. 10, at the terminal equipment side, the method includes:

step 1001: receiving, by terminal equipment, a third scaling factor set for scaling a measurement result of a serving cell, and/or a fourth scaling factor set for scaling a measurement result of a neighboring cell, notified by a base station of the serving cell;
wherein, the third and fourth scaling factor sets are as described in Embodiment 6, and shall not be described herein any further;
step 1002: selecting a corresponding scaling factor from the third scaling factor set and/or the fourth scaling factor set, according to the moving status of the terminal equipment;
in this embodiment, the scaling factor set from which the scaling factor is selected is determined according to a particular event, such as A1-A6, and B1 and B2, provided in an existing protocol;
step 1003: scaling the measurement result(s) of the serving cell and/or the neighboring cell by using the selected scaling factor, so as to obtain a scaled measurement result/scaled measurement results of the serving cell and/or the neighboring cell;
step 1004: judging whether the scaled measurement result satisfies a triggering condition to which a triggering event corresponds within predefined time; and executing step 1005 if it satisfies; otherwise, executing step 1006;
in this embodiment, the predefined time may be TTT;
step 1005: reporting a real measurement result/measurement results of the serving cell and/or the neighboring cell to the base station, if in step 1004, the result of judgment is that the scaled measurement result(s) satisfies/satisfy the triggering condition within the predefined time; and
step 1006: reporting no real measurement result/measurement results of the serving cell and/or the neighboring cell to the base station, if in step 1004, the result of judgment is that not all the scaled measurement result(s) satisfies/satisfy the triggering condition within the predefined time.

In the above embodiment, in step 1003, the terminal equipment may scale the measurement result(s) according to the selected scaling factor; furthermore, the terminal equipment may further scale the measurement result(s) taking original scale factors of the system and the selected scaling factor into account; for example, for the event A4, such as that in formulae (1) and (2), the factor for scaling the measurement result(s) may further include: an frequency offset $Ofn$ to which the frequency of the neighboring cell corresponds, a cell offset $Ocn$ to which the neighboring cell corresponds, and a hysteresis value $Hys$ to which this event corresponds. For different events, the original scale factors of the system may be different.

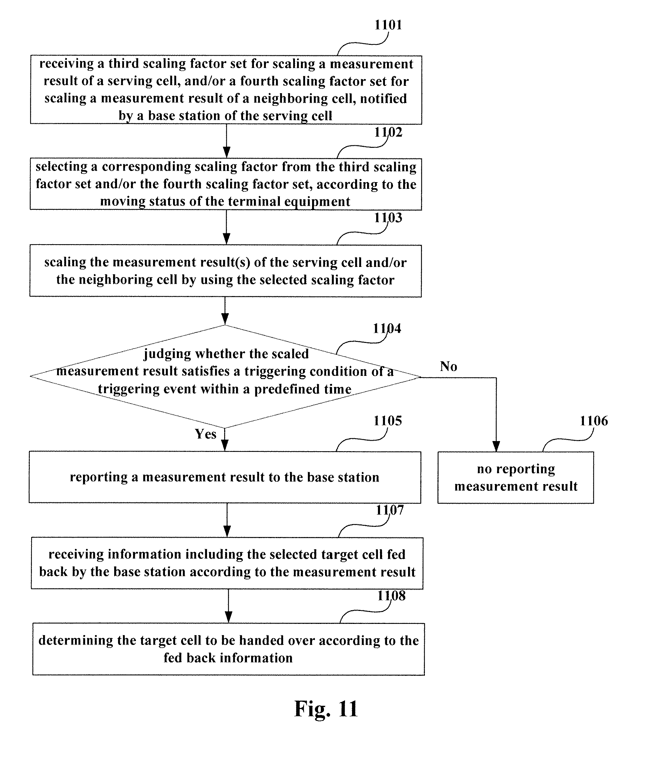

Fig. 11 is a flowchart of the method for selecting a cell of Embodiment 9 of the present invention. As shown in Fig. 11, at the terminal equipment side, the method includes:

steps 1101-1106, which are similar to steps 1001-1006 in Embodiment 8, and shall not be described herein any further. Furthermore, the method may include:

step 1107: receiving information including the selected target cell fed back by the base station according to the measurement result(s);
in this embodiment, after the terminal equipment reports its real measurement result to the base station, the base station selects a target cell that can be handed over and related configuration information for the terminal equipment, with the process being similar to the relevant art, which shall not be described herein any further;
step 1108: determining the target cell to be handed over by the terminal equipment according to the fed back information.

It can be seen from the above embodiment that the base station notifies the terminal equipment of scaling factor set(s) when the terminal equipment is in the connected mode, each scaling factor in the scaling factor set(s) corresponding to different move statuses; the terminal equipment may select a corresponding scaling factor according to its moving status, and scale an measurement result/measurement results of the serving cell and/or a neighboring cell by using the selected scaling factor, and when the scaled measurement result(s) satisfy/satisfies a triggering condition of a triggering even within predefined time, the terminal equipment reports the measurement result(s), so that the base station may select a target cell to be handed over for the terminal equipment. In this way, the base station needs no to notify the terminal equipment of sizes of the neighboring cell and the serving cell, making signaling overhead relatively low; and the terminal equipment is able to provide an optimized measurement result of a cell to the base station, so that faster terminal equipment to select more relatively large cells, slower terminal equipment to select relatively small cells, solving the above problems existed in the relevant art.

A person of ordinary skill in the art may understand that all or part of the steps in the method carrying out the above embodiment may be carried out by related hardware instructed by a program. The program may be stored in a computer-readable storage medium. And when being executed, the program may include all or part of the steps in the method in the above embodiment, and the storage medium may include an ROM, an RAM, a floppy disc, and a compact disc, etc.

Embodiments of the present invention further provide a base station and terminal equipment, as described in the embodiments below. As the principles of the base station and terminal equipment for solving problems are similar to those of the above methods for triggering a measurement report based on a base station and terminal equipment, the implementation of the methods may be referred to for the implementation of the a base station and terminal equipment, and the repeated parts shall not be described any further.

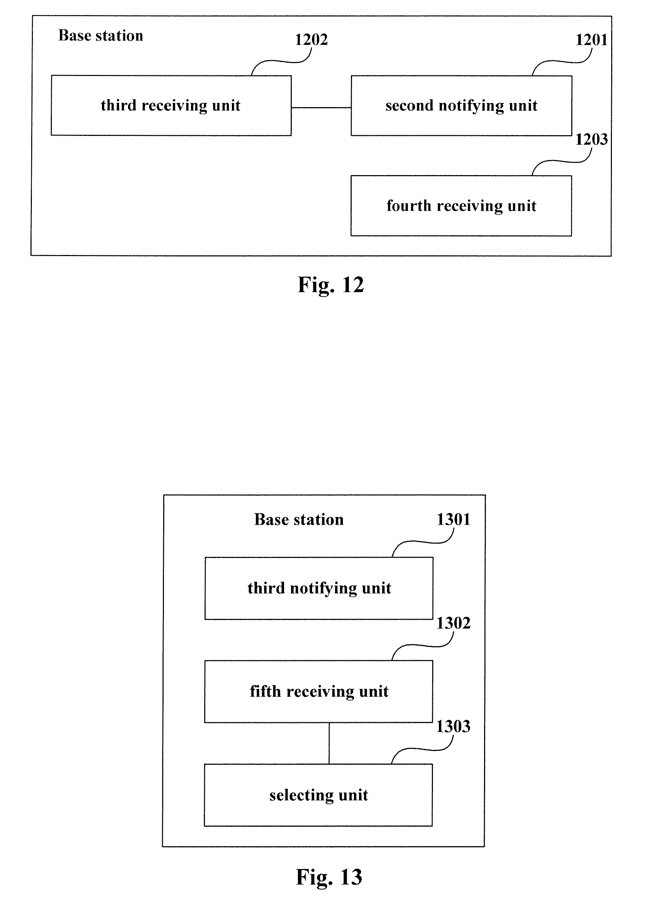

Fig. 12 is a schematic diagram of the structure of the base station of Embodiment 10 of the present invention. As shown in Fig. 12, the base station includes: a second notifying unit 1201 configured to notify terminal equipment of a third scaling factor set for scaling a measurement result of a serving cell, and/or a fourth scaling factor set for scaling a measurement result of a neighboring cell;
wherein, the third and fourth scaling factor sets are as described in Embodiment 8, and shall not be described herein any further.

In this embodiment, as shown in Fig. 12, the base station may further include: a third receiving unit 1202 configured to receive the third scaling factor set and/or the fourth scaling factor set transmitted by a network-side functional entity; wherein, the network-side functional entity is as described above, which shall not be described herein any further.

As shown in Fig. 12, the base station may further include: a fourth receiving unit 1203 configured to receive a measurement report including an unscaled measurement result/unscaled measurement results of the serving cell and/or the neighboring cell reported by the terminal equipment.

It can be seen from the above embodiment that when the terminal equipment is in the connected mode, the base station notifies the terminal equipment of the scaling factor set(s). The terminal equipment may scale the measurement result(s) of the serving cell and/or the neighboring cell by using the selected scaling factor. And when the scaled measurement result(s) satisfy/satisfies a triggering condition of a triggering even within predefined time, the terminal equipment reports the measurement result(s). In this way, the base station needs not to notify the terminal equipment of the sizes of the neighboring cell and the serving cell.

Fig. 13 is a schematic diagram of the structure of the base station of Embodiment 11 of the present invention. The base station includes a third notifying unit 1301, a fifth receiving unit 1302 and a selecting unit 1303; wherein, the functions of the third notifying unit 1301 and the fifth receiving unit 1302 are similar to those of the second notifying unit 1201 the fourth receiving unit 1203 in Embodiment 9, which shall not be described herein any further; furthermore, the base station further includes a selecting unit 1303 configured to select a target cell to which the terminal equipment is to be handed over according to the received measurement report(s) and in negotiation with other network-side entities, and transmit the information including the selected target cell to the terminal equipment; furthermore, configuration related to the target cell may also be transmitted to the terminal equipment.

Furthermore, the base station may include a receiving unit (not shown) configured to receive the third scaling factor set and/or the fourth scaling factor set transmitted by a network-side functional entity; wherein, the network-side functional entity may be as described above, and shall not be described herein any further.

It can be seen from the above embodiment that on the basis of Embodiment 10, the base station may transmit the selected target cell and related configuration information to the terminal equipment, so that the terminal equipment performs handover according to the information.

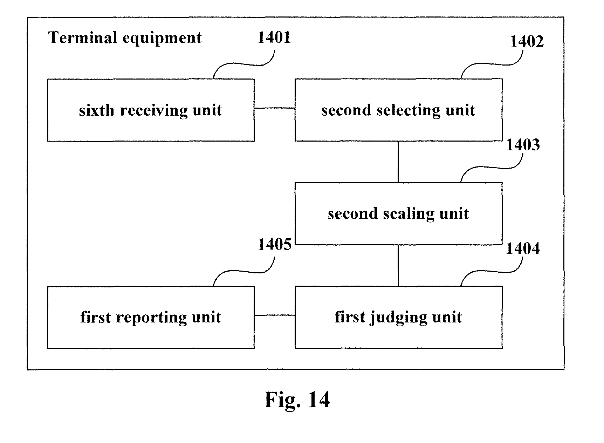

Fig. 14 is a schematic diagram of the structure of the terminal equipment of Embodiment 12 of the present invention. As an embodiment of terminal equipment of the present invention, as shown in Fig. 14, the terminal equipment includes: a sixth receiving unit 1401, a second selecting unit 1402, a second scaling unit 1403, a first judging unit 1404 and a first reporting unit 1405.

The sixth receiving unit 1401 is configured to receive a third scaling factor set for scaling a measurement result of a serving cell, and/or a fourth scaling factor set for scaling a measurement result of a neighboring cell, notified by a base station of the serving cell; wherein the third scaling factor set and the fourth scaling factor set are as described in Embodiment 8, and shall not be described herein any further.

The second selecting unit 1402 is configured to select a corresponding scaling factor from the third scaling factor set and/or the fourth scaling factor set according to the moving status of the terminal equipment.

The second scaling unit 1403 is configured to scale the measurement result(s) of the serving cell and/or the neighboring cell by using the selected scaling factor, so as to obtain a scaled measurement result/scaled measurement results of the serving cell and/or the neighboring cell.

The first judging unit 1404 is configured to judge whether the scaled measurement result/scaled measurement results satisfies/satisfy a triggering condition to which a triggering event corresponds within predefined time.

The first reporting unit 1405 is configured to report the measurement result(s) to the base station, if the judgment result of the first judging unit is yes.

In the above embodiment, besides scaling the measurement result(s) according to the selected scaling factor, the second scaling unit 1403 may scale the measurement result(s) taking both original scaling factors and the selected scaling factor into account. For example, for the event A4, such as that in formulae (1) and (2), the factor for scaling the measurement result(s) may further include: an frequency offset *Ofn* to which the frequency of the neighboring cell corresponds, a cell offset *Ocn* to which the neighboring cell corresponds, and a hysteresis value *Hys* to which this event corresponds. For different events, the original scale factors of the system may be different.

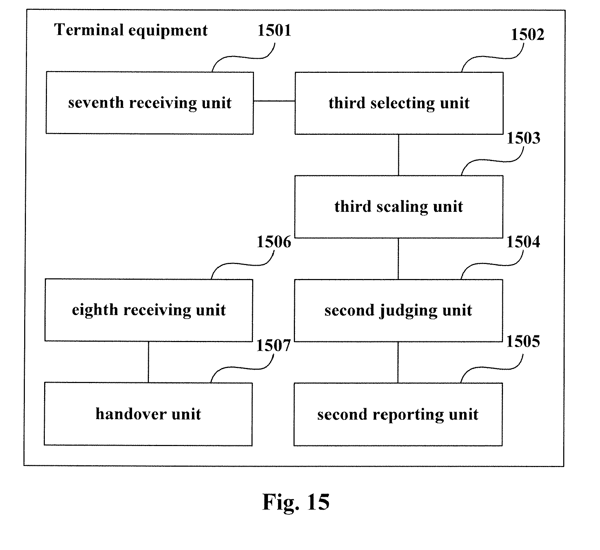

Fig. 15 is a schematic diagram of the structure of the terminal equipment of Embodiment 13 of the present invention. As an embodiment of terminal equipment of the present invention, as shown in Fig. 15, the terminal equipment includes: a seventh receiving unit 1501, a third selecting unit 1502, a third scaling unit 1503, a second judging unit 1504, a second reporting unit 1505, an eighth receiving unit 1506 and a handover unit 1507; wherein,
the functions of the seventh receiving unit 1501, the third selecting unit 1502, the third scaling unit 1503, the second judging unit 1504 and the second reporting unit 1505 are similar to those of the sixth receiving unit 1401, the second selecting unit 1402, the second scaling unit 1403, the first judging unit 1404 and the first reporting unit 1405 in Embodiment 12, and shall not be described herein any further.

As shown in Fig. 15, the eighth receiving unit 1506 is configured to receive information including the selected target cell, fed back by the base station according to the measurement result(s) reported by the second reporting unit 1505; and the handover unit 1507 is configured to determine a target cell to be handed over according to the information.

It can be seen from the above embodiment that when the terminal equipment is in the connected mode, the terminal equipment may select a corresponding scaling factor from the scaling factor set(s) notified by the base station to scale the measurement result(s) of the serving cell and/or the neighboring cell. In this way, the terminal equipment is able to provide an optimized measurement result of a cell to the base station, so that faster terminal equipment is able to select more relatively large cells, slower terminal equipment is able to select relatively small cells, thereby solving the above problems existed in the relevant art.

Following description is given taking a particular event, such the event A3 provided in a protocol, and cell handover, as examples. Although the method for triggering a measurement report is included in the method for selecting a cell, to those skilled in the art, the method for triggering a measurement report may be taken as a separate embodiment.

As for the event A3, the triggering conditions of the event, that is, a current entrance condition and exit condition, are as expressed by formulae (7) and (8):

$$\text{entrance condition: } Mn + Ofn + Ocn - Hys > Mp + Ofp + Ocp + Off \qquad (7)$$

$$\text{exit condition: } Mn + Ofn + Ocn + Hys < Mp + Ofp + Ocp + Off \qquad (8)$$

where, $M_n$ is a measurement value of a neighboring cell, taking no offset value into account; *Ofn* is a frequency offset to which the frequency of the neighboring cell corresponds; *Ocn* is a cell offset to which the neighboring cell corresponds; *Hys* is a hysteresis value to which this event corresponds; *Mp* is a measurement value of a primary cell, taking no offset value into account; *Ofp* is a frequency offset to which the frequency of the primary cell corresponds; *Ocp* is a cell offset to which the primary cell corresponds; *Off* is a hysteresis value to which this event corresponds.

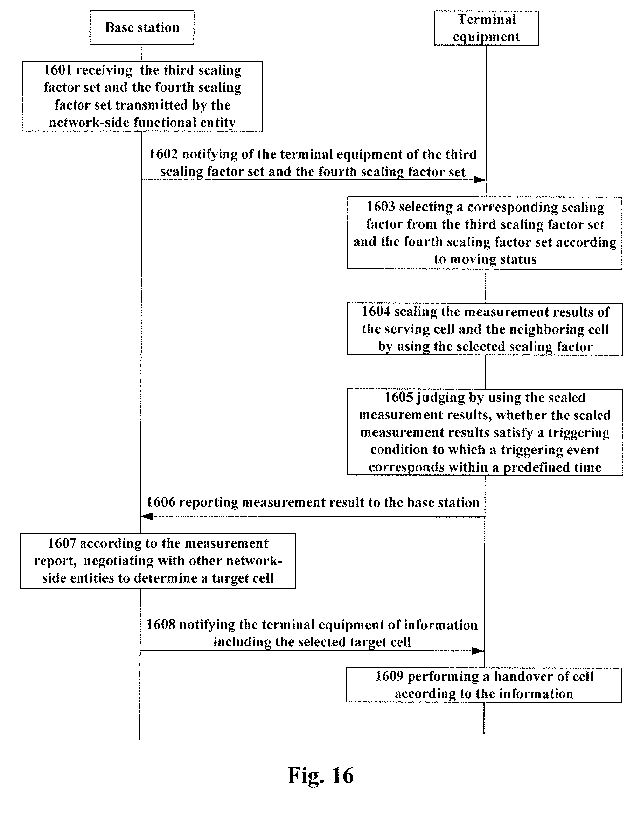

Fig. 16 is a flowchart of the method for selecting a cell of Embodiment 14 of the present invention. Following description is given with reference to Figs. 13 and 15. As shown in Fig. 16, the method includes:

step 1601: receiving by a receiving unit (not shown in Fig. 12) of the base station, the third scaling factor set and the fourth scaling factor set transmitted by the network-side functional entity;
in this embodiment, as the terminal equipment is configured with the event A3, scaling factor sets need to be configured for the serving cell and the neighboring cell at the network side;
and the scaling factors included in the third scaling factor set and the fourth scaling factor set are scaling factors corresponding respectively to a high speed and an intermediate speed, and in such a case, a scaling factor corresponding to a normal speed is deemed as 0;
in this embodiment, a scaling factor may be set for a frequency, and a scaling factor may be set for a cell; for example, the scaling factor configured here is a scaling factor for a frequency;
step 1602: notify the terminal equipment of the third scaling factor set and the fourth scaling factor set by the third notifying unit 1301 of the base station; in this way, the seventh receiving unit 1501 of the terminal equipment receives the third scaling factor set and the fourth scaling factor set;

step 1603: selecting a corresponding scaling factor from the third scaling factor set and the fourth scaling factor set by the third selecting unit 1502 of the terminal equipment according to its moving status;

in this embodiment, the corresponding scaling factor may be selected according to its moving status;

step 1604: scaling the measurement results of the serving cell and the neighboring cell by using the selected scaling factor by the third scaling unit 1503 of the terminal equipment, so as to obtain scaled measurement results of the serving cell and the neighboring cell;

in this embodiment, original scaling factors are taken into account in scaling the measurement results by using the selected scaling factor, that is, scaling the measurement results by using the selected scaling factor on the basis that the system originally scales the measurement results; in this way, the selected scaling factors of the serving cell and the neighboring cell may be added to the two sides of formulae (7) and (8), thereby obtaining scaled measurement results of the serving cell and the neighboring cell, respectively; taking formula (7) as an example, the scaling factor of the neighboring cell is added to the left side of the formula, thereby obtain a scaled measurement result of the neighboring cell, and the scaling factor of the serving cell is added to the right side of the formula, thereby obtain a scaled measurement result of the neighboring cell;

step 1605: judging by the second judging unit 1504 of the terminal equipment by using the scaled measurement results, whether the scaled measurement results satisfy a triggering condition to which a triggering event corresponds within predefined time;

in this embodiment, the predefined time may be TTT;

this step may particularly be: judging according to the scaled measurement results, whether the scaled measurement results satisfy the entrance condition of formula (7) or the exit condition of formula (8) within predefined time;

step 1606: reporting real unscaled measurement results by the second reporting unit 1505 of the terminal equipment to the base station when the result of judgment is that the entrance condition of formula (7) is satisfied within the TTT; in this way, the fifth receiving unit 1302 of the base station receives the measurement results.

steps 1607 and 1608: selecting by the selecting unit 1303 of the base station according to the measurement report and in negotiation with other network-side entities, a target cell to be handed over for the terminal equipment, and notifying the terminal equipment of information including the selected target cell;

in this embodiment, the selecting unit 1303 may judge the target cell to be handed over according to received signal quality of each cell and other factors, such as a load of the cell, and in negotiation with other network-side entities, such as a base station of a neighboring cell, taking them into account comprehensively, which is similar to the relevant art, and shall not be described herein any further;

furthermore, configuration information related to the target cell may also be transmitted to the terminal equipment;

step 1609: determining the target cell to be handed over by the handover unit 1507 according to the information after the eighth receiving unit 1506 of the terminal equipment receives the information;

for example, for the event A4, the current triggering condition of the event, i.e. the current entrance condition and exit condition, is shown in formulae (1) and (2).

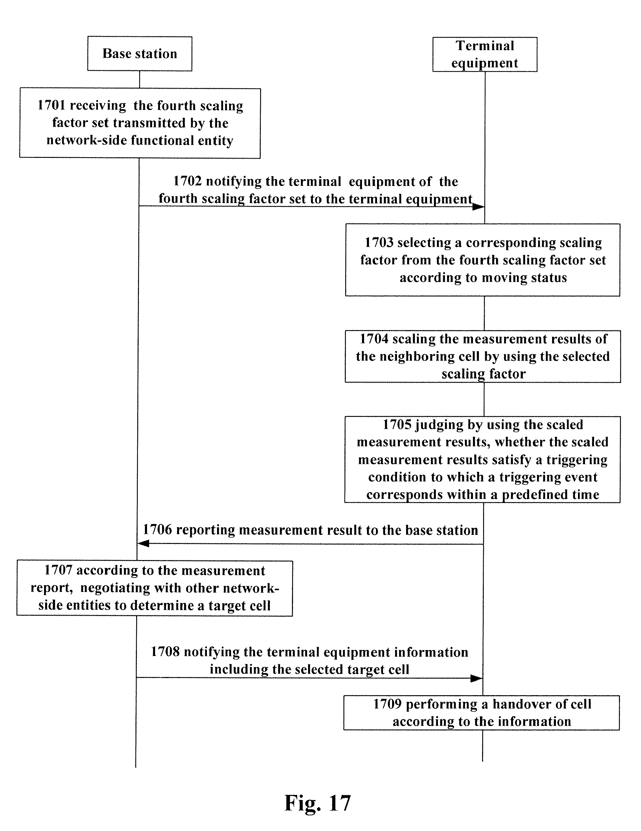

Fig. 17 is a flowchart of the method for selecting a cell of Embodiment 15 of the present invention. As shown in Fig. 17, the method includes:

step 1701: receiving by a receiving unit (not shown in Fig. 12) of the base station, the fourth scaling factor set transmitted by the network-side functional entity;

in this embodiment, as the terminal equipment is configured with the event A4, a scaling factor set needs to be configured for the neighboring cell at the network side;

and the scaling factors included in the fourth scaling factor set are scaling factors corresponding respectively to a high speed, an intermediate speed and a normal speed;

in this embodiment, a scaling factor may be set for a frequency, and a scaling factor may be set for a cell, or scaling factor may be set for both of them; for example, the scaling factor configured here is a scaling factor for a frequency;

step 1702: notifying the terminal equipment of the fourth scaling factor set by the third notifying unit 1301 of the base station; in this way, the seventh receiving unit 1501 of the terminal equipment receives the fourth scaling factor set;

step 1703: selecting a corresponding scaling factor from the fourth scaling factor set by the third selecting unit 1502 of the terminal equipment according to its moving status;

in this embodiment, the corresponding scaling factor may be selected according to its moving status;

step 1704: scaling the measurement result of the neighboring cell by using the selected scaling factor by the third scaling unit 1503 of the terminal equipment, so as to obtain a scaled measurement result of the neighboring cell;

in this embodiment, the selected scaling factor of the neighboring cell may be added to the left sides of formulae (1) and (2), thereby obtaining a scaled measurement result of the neighboring cell;

in this embodiment, original scaling factors, i.e. a frequency offset *Ofn* to which the frequency of the neighboring cell corresponds, a cell offset *Ocn* to which the neighboring cell corresponds, and a hysteresis value *Hys* to which this event corresponds, are taken into account in scaling the measurement result;

step 1705: judging by the second judging unit 1504 of the terminal equipment by using the scaled measurement result, whether the scaled measurement result satisfies a triggering condition to which a triggering event corresponds within predefined time;

in this embodiment, the predefined time may be TTT;

this step may particularly be: judging according to the scaled measurement result, whether the scaled measurement result satisfies the entrance condition of formula (1) or the exit condition of formula (2) within predefined time;

step 1706: reporting the measurement result by the second reporting unit 1505 of the terminal equipment to the base station when the result of judgment is that the entrance condition is satisfied within the TTT; in this way, the fifth receiving unit 1302 of the base station receives the measurement result;

steps 1707-1709 are similar to steps 1607-1609 shown in Fig. 16, and shall not be described herein any further;

likewise, events A5, A6, B1 and B2 provided in an existing protocol may use the above method, which shall not be described herein any further.

An embodiment of the present invention further provides a computer-readable program, wherein when the program is executed in a base station, the program enables a computer to carry out the method for selecting cell as described in embodiments 1, 5, 7, 14 and 15 in the base station.

An embodiment of the present invention further provides a storing medium in which a computer-readable program is stored, wherein the computer-readable program enables a computer to carry out the method for selecting cell as described in embodiments 1, 5, 7, 14 and 15 in a base station.

An embodiment of the present invention further provides a computer-readable program, wherein when the program is executed in terminal equipment, the program enables a computer to carry out the method for selecting cell as described in embodiments 2, 5, 9, 14 and 15 in the terminal equipment.

An embodiment of the present invention further provides a storing medium in which a computer-readable program is stored, wherein the computer-readable program enables a computer to carry out the method for selecting cell as described in embodiments 2, 5, 9, 14 and 15 in terminal equipment.

An embodiment of the present invention further provides a computer-readable program, wherein when the program is executed in a base station, the program enables a computer to carry out the method for triggering measurement report as described in embodiments 6, 14 and 15 in the base station.

An embodiment of the present invention further provides a storing medium in which a computer-readable program is stored, wherein the computer-readable program enables a computer to carry out the method for triggering measurement report as described in embodiments 6, 14 and 15 in a base station.

An embodiment of the present invention further provides a computer-readable program, wherein when the program is executed in terminal equipment, the program enables a computer to carry out the method for triggering measurement report as described in embodiments 8, 14 and 15 in the terminal equipment.

An embodiment of the present invention further provides a storing medium in which a computer-readable program is stored, wherein the computer-readable program enables a computer to carry out the method for triggering measurement report as described in embodiments 8, 14 and 15 in terminal equipment.

The above apparatuses and methods of the present invention may be implemented by hardware, or by hardware in combination with software. The present invention relates to such a computer-readable program that when the program is executed by a logic device, the logic device is enabled to carry out the apparatus or components as described above, or to carry out the methods or steps as described above. The present invention also relates to a storage medium for storing the above program, such as a hard disk, a floppy disk, a CD, a DVD, and a flash memory, etc.

The present invention is described above with reference to particular embodiments. However, it should be understood by those skilled in the art that such a description is illustrative only, and not intended to limit the protection scope of the present invention. Various variants and modifications may be made by those skilled in the art according to the spirits and principle of the present invention, and such variants and modifications fall within the scope of the present invention.

**Claims**

1.　A method for selecting a cell, comprising:

notifying, by a base station, terminal equipment of a first scaling factor set for scaling hysteresis of a measurement result of a serving cell needed in evaluation of the serving cell, and/or a second scaling factor set for scaling an offset value of a measurement result of a neighboring cell needed in evaluation of the neighboring cell;

wherein, the first scaling factor set includes one or more scaling factors, and the second scaling factor set includes one or more scaling factors, the one scaling factor corresponding to a predefined moving speed, and each of the more scaling factors corresponding to a different moving speed.

2. The method according to claim 1, wherein the scaling factor(s) included in the first scaling factor set is/are a scaling factor/scaling factors for the frequency of the serving cell, and/or a scaling factor/scaling factors for each cell; and the scaling factor(s) included in the second scaling factor set is/are a scaling factor/scaling factors for the frequency of the neighboring cell, and/or a scaling factor/scaling factors for each cell.

3. The method according to claim 1 or 2, wherein the method further comprises:

receiving, by the base station, the first scaling factor set and/or the second scaling factor set transmitted by a network-side functional entity.

4. The method according to claim 1 or 2, wherein the scaling factor(s) included in the first scaling factor set and the scaling factor(s) included in the second scaling factor set are arbitrary values.

5. The method according to claim 4, wherein when a cell size is relatively large, the faster the speed of the terminal equipment is, the greater the scaling factors are; and when the cell size is relatively small, the faster the speed of the terminal equipment is, the smaller the scaling factors are.

6. A method for selecting a cell, comprising:

receiving, by terminal equipment, a first scaling factor set for scaling hysteresis of a measurement result of a serving cell needed in evaluation of the serving cell, and/or a second scaling factor set for scaling an offset value of a measurement result of a neighboring cell needed in evaluation of the neighboring cell, notified by a base station of the serving cell; wherein the first scaling factor set includes one or more scaling factors, and the second scaling factor set includes one or more scaling factors, the one scaling factor corresponding to a predefined moving speed, and each of the more scaling factors corresponding to a different moving speed;
selecting a corresponding scaling factor from the first scaling factor set and/or the second scaling factor set according to a moving status of the terminal equipment;
scaling an evaluation result/evaluation results of the serving cell and/or the neighboring cell by using the selected scaling factor, so as to obtain a scaled evaluation result/scaled evaluation results of the serving cell and/or the neighboring cell; and
performing cell reselection by using the scaled evaluation result/scaled evaluation results.

7. The method according to claim 6, wherein the scaling factor(s) included in the first scaling factor set is/are scaling factor(s) for the frequency of the serving cell, and/or scaling factor(s) for each cell; and the scaling factor(s) included in the second scaling factor set is/are scaling factor(s) for the frequency of the neighboring cell, and/or scaling factor(s) for each cell.

8. The method according to claim 6, wherein the step of scaling the evaluation result of the serving cell and/or the neighboring cell by using the selected scaling factor comprises:

adding up the selected scaling factor and the evaluation result, so as to obtain a scaled evaluation result/scaled evaluation results of the serving cell and/or the neighboring cell.

9. A base station, comprising:

a first notifying unit configured to notify terminal equipment of a first scaling factor set for scaling hysteresis of a measurement result of a serving cell needed in evaluation of the serving cell, and/or a second scaling factor set for scaling an offset value of a measurement result of a neighboring cell needed in evaluation of the neighboring cell;
wherein, the first scaling factor set includes one or more scaling factors, and the second scaling factor set includes one or more scaling factors, with the one scaling factor corresponding to a predefined moving speed, and each of the more scaling factors corresponding to a different moving speed.

10. The base station according to claim 9, wherein the scaling factor(s) included in the first scaling factor set is/are scaling factor(s) for the frequency of the serving cell, and/or scaling factor(s) for each cell; and
the scaling factor(s) included in the second scaling factor set is/are scaling factor(s) for the frequency of the neighboring cell, and/or scaling factor(s) for each cell.

11. The base station according to claim 9 or 10, wherein the base station further comprises:

a first receiving unit configured to receive the first scaling factor set and/or the second scaling factor set transmitted by a network-side functional entity.

12. Terminal equipment, comprising:

a second receiving unit configured to receive a first scaling factor set for scaling hysteresis of a measurement result of a serving cell needed in evaluation of the serving cell, and/or a second scaling factor set for scaling an offset value of a measurement result of a neighboring cell needed in evaluation of the neighboring cell, notified by a base station of the serving cell;
wherein the first scaling factor set includes one or more scaling factors, and the second scaling factor set includes one or more scaling factors, with the one scaling factor corresponding to a predefined moving speed, and each of the more scaling factors corresponding to a different moving speed;
a first selecting unit configured to select a corresponding scaling factor from the first scaling factor set and/or the second scaling factor set, according to the moving status of the terminal equipment;
a first scaling unit configured to scale the evaluation result(s) of the serving cell and/or the neighboring cell by using the scaling factor selected by the first selecting unit, so as to obtain a scaled evaluation result/scaled evaluation results of the serving cell and/or the neighboring cell; and
a reselecting unit configured to reselect a cell by using the scaled evaluation result(s).

13. The terminal equipment according to claim 12, wherein the scaling factor(s) included in the first scaling factor set is/are scaling factor(s) for the frequency of the serving cell, and/or scaling factor(s) for different cells; and
the scaling factor(s) included in the second scaling factor set is/are scaling factor(s) for the frequency of the neighboring cell, and/or scaling factor(s) for different cells.

14. A method for triggering a measurement report, comprising:

notifying, by a base station, terminal equipment of a third scaling factor set for scaling a measurement result of a serving cell, and/or a fourth scaling factor set for scaling a measurement result of a neighboring cell;
wherein, the third scaling factor set includes one or more scaling factors, and the fourth scaling factor set includes one or more scaling factors, the one scaling factor corresponding to a predefined moving speed, and each of the more scaling factors corresponding to a different moving speed.

15. The method according to claim 14, wherein the method further comprises:

receiving a measurement report comprising an unscaled measurement result/unscaled measurement results of the serving cell and/or the neighboring cell, reported by terminal equipment.

16. A method for selecting a cell, comprising:

notifying, by a base station, terminal equipment of a third scaling factor set for scaling a measurement result of a serving cell, and/or a fourth scaling factor set for scaling a measurement result of a neighboring cell;
wherein, the third scaling factor set includes one or more scaling factors, and the fourth scaling factor set includes one or more scaling factors, the one scaling factor corresponding to a predefined moving speed, and each of the more scaling factors corresponding to a different moving speed;
receiving a measurement report comprising an unscaled measurement result/unscaled measurement results of the serving cell and/or the neighboring cell, reported by terminal equipment; and
selecting a target cell to which the terminal equipment is to be handed over according to the measurement report and in negotiation with other network-side entities, and notifying the terminal equipment of information comprising the selected target cell.

17. The method according to claim 14 or 16, wherein the scaling factor(s) included in the third scaling factor set is/are scaling factor(s) for the frequency of the serving cell, and/or scaling factor(s) for each cell;

and the scaling factor(s) included in the fourth scaling factor set is/are scaling factor(s) for the frequency of the neighboring cell, and/or scaling factor(s) for each cell.

**18.** The method according to claim 14 or 16, wherein the method further comprises:

receiving, by the base station, the third scaling factor set and/or the fourth scaling factor set transmitted by a network-side functional entity.

**19.** The method according to claim 14 or 16, wherein the scaling factor(s) included in the third scaling factor set and the scaling factor(s) included in the fourth scaling factor set are arbitrary values.

**20.** The method according to claim 19, wherein when a cell size is relatively large, the faster the speed of the terminal equipment is, the greater the scaling factors are; and when the cell size is relatively small, the faster the speed of the terminal equipment is, the smaller the scaling factors are.

**21.** A method for triggering a measurement report, comprising:

receiving, by terminal equipment, a third scaling factor set for scaling a measurement result of a serving cell, and/or a fourth scaling factor set for scaling a measurement result of a neighboring cell, notified by a base station of the serving cell;
wherein, the third scaling factor set includes one or more scaling factors, and the fourth scaling factor set includes one or more scaling factors, the one scaling factor corresponding to a predefined moving speed, and each of the more scaling factors corresponding to a different moving speed;
selecting a corresponding scaling factor from the third scaling factor set and/or the fourth scaling factor set, according to the moving status of the terminal equipment;
scaling the measurement result(s) of the serving cell and/or the neighboring cell by using the selected scaling factor, so as to obtain a scaled measurement result/scaled measurement results of the serving cell and/or the neighboring cell;
judging whether a triggering condition to which a triggering event corresponds is satisfied by using the scaled measurement result; and
reporting an unscaled measurement result to the base station, if the triggering condition is satisfied.

**22.** A method for selecting a cell, comprising:

receiving, by terminal equipment, a third scaling factor set for scaling a measurement result of a serving cell, and/or a fourth scaling factor set for scaling a measurement result of a neighboring cell, notified by a base station of the serving cell; wherein the third scaling factor set includes one or more scaling factors, and the fourth scaling factor set includes one or more scaling factors, the one scaling factor corresponding to a predefined moving speed, and each of the more scaling factors corresponding to a different moving speed;
selecting a corresponding scaling factor from the third scaling factor set and/or the fourth scaling factor set, according to the moving status of the terminal equipment;
scaling the measurement result(s) of the serving cell and/or the neighboring cell by using the selected scaling factor, so as to obtain a scaled measurement result/scaled measurement results of the serving cell and/or the neighboring cell;
judging whether a triggering condition to which a triggering event corresponds is satisfied by using the scaled measurement result;
reporting an unscaled measurement result to the base station, if the triggering condition is satisfied;
receiving information comprising a selected target cell, fed back by the base station according to the measurement result(s); and
determining a target cell to be handed over according to the information.

**23.** The method according to claim 21 or 22, wherein the scaling factor(s) included in the third scaling factor set is/are scaling factor(s) for the frequency of the serving cell, and/or scaling factor(s) for each cell;
and the scaling factor(s) included in the fourth scaling factor set is/are scaling factor(s) for the frequency of the neighboring cell, and/or scaling factor(s) for each cell.

**24.** The method according to claim 21 or 22, wherein the scaling factor(s) included in the third scaling factor set and the scaling factor(s) included in the fourth scaling factor set are arbitrary values.

**25.** A base station, comprising:

a second notifying unit configured to notify terminal equipment of a third scaling factor set for scaling a measurement result of a serving cell, and/or a fourth scaling factor set for scaling a measurement result of a neighboring cell;
wherein, the third scaling factor set includes one or more scaling factors, and the fourth scaling factor set includes one or more scaling factors, the one scaling factor corresponding to a predefined moving speed, and each of the more scaling factors corresponding to a different moving speed.

**26.** The base station according to claim 25, wherein the scaling factor(s) included in the third scaling factor set is/are scaling factor(s) for the frequency of the serving cell, and/or scaling factor(s) for each cell; and
the scaling factor(s) included in the fourth scaling factor set is/are scaling factor(s) for the frequency of the neighboring cell, and/or scaling factor(s) for each cell.

**27.** The base station according to claim 25 or 26, wherein the base station further comprises:

a third receiving unit configured to receive the third scaling factor set and/or the fourth scaling factor set transmitted by a network-side functional entity.

**28.** The base station according to claim 25, wherein the base station further comprises:

a fourth receiving unit configured to receive a measurement report comprising an unscaled measurement result/unsealed measurement results of the serving cell and/or neighboring cell, reported by terminal equipment.

**29.** A base station, comprising:

a third notifying unit configured to notify terminal equipment of a third scaling factor set for scaling a measurement result of a serving cell, and/or a fourth scaling factor set for scaling a measurement result of a neighboring cell;
wherein, the third scaling factor set includes one or more scaling factors, and the fourth scaling factor set includes one or more scaling factors, the one scaling factor corresponding to a predefined moving speed, and each of the more scaling factors corresponding to a different moving speed;
a fifth receiving unit configured to receive a measurement report comprising an unsealed measurement result/unsealed measurement results of the serving cell and/or neighboring cell, reported by terminal equipment; and
a selecting unit configured to select a target cell to which the terminal equipment is to be handed over according to the measurement report(s) and in negotiation with other network-side entities, and notify the terminal equipment of the information comprising the selected target cell.

**30.** Terminal equipment, comprising:

a sixth receiving unit configured to receive a third scaling factor set for scaling a measurement result of a serving cell, and/or a fourth scaling factor set for scaling a measurement result of a neighboring cell, notified by a base station of the serving cell;
wherein, the third scaling factor set includes one or more scaling factors, and the fourth scaling factor set includes one or more scaling factors, the one scaling factor corresponding to a predefined moving speed, and each of the more scaling factors corresponding to a different moving speed;
a second selecting unit configured to select a corresponding scaling factor from the third scaling factor set and/or the fourth scaling factor set, according to the moving status of the terminal equipment;
a second scaling unit configured to scale the measurement result(s) of the serving cell and/or the neighboring cell by using the selected scaling factor, so as to obtain a scaled measurement result/scaled measurement results of the serving cell and/or the neighboring cell;
a first judging unit configured to judge whether a triggering condition to which a triggering event corresponds is satisfied by using the scaled measurement result; and
a first reporting unit configured to report an unsealed measurement result/unsealed measurement results of the serving cell and/or the neighboring cell to the base station, if the judgment result of the first judging unit is that the triggering condition is satisfied.

**31.** Terminal equipment, comprising:

a seventh receiving unit configured to receive a third scaling factor set for scaling a measurement result of a serving cell, and/or a fourth scaling factor set for scaling a measurement result of a neighboring cell, notified by a base station of the serving cell;

wherein, the third scaling factor set includes one or more scaling factors, and the fourth scaling factor set includes one or more scaling factors, the one scaling factor corresponding to a predefined moving speed, and each of the more scaling factors corresponding to a different moving speed;

a third selecting unit configured to select a corresponding scaling factor from the third scaling factor set and/or the fourth scaling factor set, according to the moving status of the terminal equipment;

a third scaling unit configured to scale the measurement result(s) of the serving cell and/or the neighboring cell by using the selected scaling factor, so as to obtain a scaled measurement result/scaled measurement results of the serving cell and/or the neighboring cell;

a second judging unit configured to judge whether a triggering condition to which a triggering event corresponds is satisfied by using the scaled measurement result;

a second reporting unit configured to report an unsealed measurement result to the base station, if the judgment result of the second judging unit is that the triggering condition is satisfied;

an eighth receiving unit configured to receive information comprising the selected target cell, fed back by the base station according to the measurement result(s); and

a handover unit configured to determine a target cell to be handed over according to the information.

32. A computer-readable program, wherein when the program is executed in a base station, the program enables a computer to carry out the method for selecting cell as claimed in any one of claims 1-5 or 16-20 in the base station.

33. A storing medium in which a computer-readable program is stored, wherein the computer-readable program enables a computer to carry out the method for selecting cell as claimed in any one of claims 1-5 or 16-20 in a base station.

34. A computer-readable program, wherein when the program is executed in terminal equipment, the program enables a computer to carry out the method for selecting cell as claimed in any one of claims 6-8 or 22-24 in the terminal equipment.

35. A storing medium in which a computer-readable program is stored, wherein the computer-readable program enables a computer to carry out the method for selecting cell as claimed in any one of claims 6-8 or 22-24 in terminal equipment.

36. A computer-readable program, wherein when the program is executed in a base station, the program enables a computer to carry out the method for triggering measurement report as claimed in any one of claims 14-15 or 17-20 in the base station.

37. A storing medium in which a computer-readable program is stored, wherein the computer-readable program enables a computer to carry out the method for triggering measurement report as claimed in any one of claims 14-15 or 17-20 in a base station.

38. A computer-readable program, wherein when the program is executed in terminal equipment, the program enables a computer to carry out the method for triggering measurement report as claimed in any one of claims 21 or 23-24 in the terminal equipment.

39. A storing medium in which a computer-readable program is stored, wherein the computer-readable program enables a computer to carry out the method for triggering measurement report as claimed in any one of claims 21 or 23-24 in terminal equipment.

| satisfy entrance condition | terminal equipment reports measurement result | satisfy exit condition |

threshold value

measurement value + offset value + hysteresis value
measurement value + offset value
measurement value + offset value - hysteresis value

t

◄── TTT ──►

## Fig. 1

201

notifying, by a base station, terminal equipment of a first scaling factor set for scaling hysteresis of a measurement result of a serving cell needed in evaluation of the serving cell

202

notifying, by the base station, the terminal equipment of a second scaling factor set for scaling an offset value of a measurement result of a neighboring cell needed in evaluation of the neighboring cell

## Fig. 2

301

receiving, by terminal equipment, a first scaling factor set for scaling hysteresis of a measurement result of a serving cell needed in evaluation of the serving cell, and/or a second scaling factor set for scaling an offset value of a measurement result of a neighboring cell needed in evaluation of the neighboring cell, notified by a base station of the serving cell

302

selecting a corresponding scaling factor from the first scaling factor set and/or the second scaling factor set according to a moving status of the terminal equipment

303

scaling an evaluation result/evaluation results of the serving cell and/or the neighboring cell by using the selected scaling factor, so as to obtain a scaled evaluation result/scaled evaluation results of the serving cell and/or the neighboring cell

304

performing cell reselection by using the scaled evaluation result/ scaled evaluation results

**Fig. 3**

Base station

402                                      401

| first receiving unit | first notifying unit |

**Fig. 4**

**Fig. 5**

**Fig. 6**

| Base station | | Terminal equipment |

701 receiving the first scaling factor set and/or the second scaling factor set, transmitted by the network-side functional entity

702 notifying the terminal equipment of the first scaling factor set and/or the second scaling factor set

703 selecting a corresponding scaling factor from the first scaling factor set and/or the second scaling factor set according to the moving status

704 scaling the evaluation results of the serving cell and/or the neighboring cell by using the selected scaling factor

705 performing cell reselection by the reselecting unit 604 by using the scaled evaluation results

**Fig. 7**

801

notifying, by a base station, terminal equipment of a third scaling factor set for scaling a measurement result of a serving cell, and/or a fourth scaling factor set for scaling a measurement result of a neighboring cell

802

receiving a measurement report reported by the terminal equipment

**Fig. 8**

901

notifying, by a base station, terminal equipment of a
third scaling factor set for scaling a measurement result
of a serving cell, and/or a fourth scaling factor set for
scaling a measurement result of a neighboring cell

902

receiving a measurement report reported by the
terminal equipment

903

negotiating with another network-side entity according
to the measurement report, so as to select a target cell to
be handed over for the terminal equipment and
transmit the selected target cell to the terminal
equipment

## Fig. 9

1001

receiving a third scaling factor set for scaling a measurement
result of a serving cell, and/or a fourth scaling factor set for
scaling a measurement result of a neighboring cell, notified
by a base station of the serving cell

1002

selecting a corresponding scaling factor from the third scaling
factor set and/or the fourth scaling factor set, according to the
moving status of the terminal equipment

1003

scaling the measurement result(s) of the serving cell and/or
the neighboring cell by using the selected scaling factor

1004

judging whether the scaled
measurement result satisfies a triggering condition of a
triggering event within a predefined time

No

Yes

1005

reporting a measurement result to the base station

1006

no reporting
measurement result

## Fig. 10

1101

receiving a third scaling factor set for scaling a measurement
result of a serving cell, and/or a fourth scaling factor set for
scaling a measurement result of a neighboring cell, notified
by a base station of the serving cell

1102

selecting a corresponding scaling factor from the third scaling
factor set and/or the fourth scaling factor set, according to the
moving status of the terminal equipment

1103

scaling the measurement result(s) of the serving cell and/or
the neighboring cell by using the selected scaling factor

1104

judging whether the scaled
measurement result satisfies a triggering condition of a
triggering event within a predefined time

No

Yes

1105

reporting a measurement result to the base station

1106

no reporting
measurement result

1107

receiving information including the selected target cell fed
back by the base station according to the measurement result

1108

determining the target cell to be handed over according to the
fed back information

**Fig. 11**

Base station

third receiving unit 1202

second notifying unit 1201

fourth receiving unit 1203

**Fig. 12**

Base station 1301

third notifying unit

fifth receiving unit 1302

selecting unit 1303

**Fig. 13**

Terminal equipment 1401 1402

sixth receiving unit — second selecting unit

1403

second scaling unit

1405 1404

first reporting unit — first judging unit

Fig. 14

Terminal equipment

seventh receiving unit 1501 — third selecting unit 1502

1503 third scaling unit

eighth receiving unit 1506 — second judging unit 1504

handover unit 1507 — second reporting unit 1505

Fig. 15

Base station

Terminal equipment

1601 receiving the third scaling factor set and the fourth scaling factor set transmitted by the network-side functional entity

1602 notifying of the terminal equipment of the third scaling factor set and the fourth scaling factor set

1603 selecting a corresponding scaling factor from the third scaling factor set and the fourth scaling factor set according to moving status

1604 scaling the measurement results of the serving cell and the neighboring cell by using the selected scaling factor

1605 judging by using the scaled measurement results, whether the scaled measurement results satisfy a triggering condition to which a triggering event corresponds within a predefined time

1606 reporting measurement result to the base station

1607 according to the measurement report, negotiating with other network-side entities to determine a target cell

1608 notifying the terminal equipment of information including the selected target cell

1609 performing a handover of cell according to the information

**Fig. 16**

Base station

Terminal equipment

1701 receiving the fourth scaling factor set transmitted by the network-side functional entity

1702 notifying the terminal equipment of the fourth scaling factor set to the terminal equipment

1703 selecting a corresponding scaling factor from the fourth scaling factor set according to moving status

1704 scaling the measurement results of the neighboring cell by using the selected scaling factor

1705 judging by using the scaled measurement results, whether the scaled measurement results satisfy a triggering condition to which a triggering event corresponds within a predefined time

1706 reporting measurement result to the base station

1707 according to the measurement report, negotiating with other network-side entities to determine a target cell

1708 notifying the terminal equipment information including the selected target cell

1709 performing a handover of cell according to the information

Fig. 17

<div align="center">

# INTERNATIONAL SEARCH REPORT

</div>

| | International application No. |
|---|---|
| | PCT/CN2011/081883 |

**A. CLASSIFICATION OF SUBJECT MATTER**

H04W 36/32 (2009.01) i

According to International Patent Classification (IPC) or to both national classification and IPC

**B. FIELDS SEARCHED**

Minimum documentation searched (classification system followed by classification symbols)

IPC: H04W 36/-; H04W 48/-; H04W 60/-; H04W 24/-

Documentation searched other than minimum documentation to the extent that such documents are included in the fields searched

Electronic data base consulted during the international search (name of data base and, where practicable, search terms used)

CNABS, CNTXT, CNKI, VEN: cell?, reselect???, select???, handover???, Hysteresis, Qhyst, offset?, mobil+, speed, velocity, size, correct???, scal???, adjust???, factor?, coefficient

**C. DOCUMENTS CONSIDERED TO BE RELEVANT**

| Category* | Citation of document, with indication, where appropriate, of the relevant passages | Relevant to claim No. |
|---|---|---|
| X | CN 101663905 A (INTERDIGITAL TECHNOLOGY CORP) 03 March 2010 (03.03.2010) description, page 16, paragraph 2, page 20, the first line to the last line, page 22, line 21 to page 25, line 5 and figure 2 | 1, 3, 4, 6, 8, 9, 11, 12, 14-16, 18, 19, 21, 22, 24, 25, 27-39 |
| Y | The same as above | 2, 5, 7, 10, 13, 17, 20, 23, 26 |
| Y | US 2011021201 A1 (LG ELECTRONICS INC) 27 January 2011 (27.01.2011) description, paragraphs 00167, 00168, 00171, 00172, 00187 | 2, 5, 7, 10, 13, 17, 20, 23, 26 |

☒ Further documents are listed in the continuation of Box C.　　　☒ See patent family annex.

| | |
|---|---|
| *　　Special categories of cited documents: | "T"　later document published after the international filing date or priority date and not in conflict with the application but cited to understand the principle or theory underlying the invention |
| "A"　document defining the general state of the art which is not considered to be of particular relevance | |
| "E"　earlier application or patent but published on or after the international filing date | "X"　document of particular relevance; the claimed invention cannot be considered novel or cannot be considered to involve an inventive step when the document is taken alone |
| "L"　document which may throw doubts on priority claim(s) or which is cited to establish the publication date of another citation or other special reason (as specified) | "Y"　document of particular relevance; the claimed invention cannot be considered to involve an inventive step when the document is combined with one or more other such documents, such combination being obvious to a person skilled in the art |
| "O"　document referring to an oral disclosure, use, exhibition or other means | |
| "P"　document published prior to the international filing date but later than the priority date claimed | "&"document member of the same patent family |

| Date of the actual completion of the international search | Date of mailing of the international search report |
|---|---|
| 03 July 2012 (03.07.2012) | 16 August 2012 (16.08.2012) |

| Name and mailing address of the ISA | Authorized officer |
|---|---|
| State Intellectual Property Office of the P. R. China No. 6, Xitucheng Road, Jimenqiao Haidian District, Beijing 100088, China Facsimile No. (86-10)62019451 | ZHANG, Zhen Telephone No. (86-10)62411291 |

Form PCT/ISA /210 (second sheet) (July 2009)

## INTERNATIONAL SEARCH REPORT

| International application No. |
| --- |
| PCT/CN2011/081883 |

C (Continuation).    DOCUMENTS CONSIDERED TO BE RELEVANT

| Category* | Citation of document, with indication, where appropriate, of the relevant passages | Relevant to claim No. |
| --- | --- | --- |
| A | CN 101965024 A (ZTE CORP) 02 February 2011 (02.02.2011)<br><br>the whole document | 1-39 |

Form PCT/ISA /210 (continuation of second sheet ) (July 2009)

## INTERNATIONAL SEARCH REPORT
### Information on patent family members

| International application No. |
| --- |
| PCT/CN2011/081883 |

| Patent Documents referred in the Report | Publication Date | Patent Family | Publication Date |
| --- | --- | --- | --- |
| CN 101663905 A | 03.03.2010 | EP 2135474 A1 | 23.12.2009 |
| | | CN 201365345 Y | 16.12.2009 |
| | | TWM 339859 U | 01.09.2008 |
| | | US 2008220784 A1 | 11.09.2008 |
| | | MX 2009009610 A | 31.10.2009 |
| | | KR 20100016494 A | 12.02.2010 |
| | | CA 2680303 A1 | 18.09.2008 |
| | | AU 2008226975 B2 | 31.03.2011 |
| | | JP 2010521119 A | 17.06.2010 |
| | | RU 2433544 C2 | 10.11.2011 |
| | | AU 2008226975 A1 | 18.09.2008 |
| | | IN 200905779 P1 | 04.06.2010 |
| | | AU 2011203129 A1 | 21.07.2011 |
| | | RU 2009137377 A | 20.04.2011 |
| | | WO 2008112126 A1 | 18.09.2008 |
| | | TW 200838332 A | 16.09.2008 |
| | | KR 20090129448 A | 16.12.2009 |
| | | AR 065675 A1A1 | 24.06.2009 |
| US 2011021201 A1 | 27.01.2011 | WO 2011013967 A2 | 03.02.2011 |
| | | KR 20110011554 A | 08.02.2011 |
| | | WO 2011013967 A3 | 03.06.2011 |
| | | GB 2482820 A | 15.02.2012 |
| | | GB 201120282 D0 | 04.01.2012 |
| CN 101965024 A | 02.02.2011 | None | |

Form PCT/ISA/210 (patent family annex) (July 2009)